# EUROPÄISCHE PATENTSCHRIFT

(11) **EP 3 044 128 B1**
(45) Veröffentlichungstag und Bekanntmachung des Hinweises auf die Patenterteilung: **17.08.2022**
(21) Anmeldenummer: 14766453.6
(22) Anmeldetag: 11.09.2014
(51) Int. Cl.: B65G 1/137, G06Q 10/08

(54) **SYSTEM UND VERFAHREN ZUM GEMEINSAMEN KOMMISSIONIEREN VON ZERBRECHLICHEN UND UNZERBRECHLICHEN ARTIKELN**
SYSTEM AND METHOD FOR THE JOINT PICKING OF BREAKABLE AND UNBREAKABLE ARTICLES
SYSTÈME ET PROCÉDÉ DE PRÉPARATION COMMUNE DE COMMANDES D'ARTICLES FRAGILES ET INCASSABLES

(30) Priorität: 13.09.2013 DE 102013015456
(43) Veröffentlichungstag der Anmeldung: 20.07.2016
(73) Patentinhaber: SSI Schäfer Automation GmbH, 97232 Giebelstadt (DE)
(72) Erfinder: ISSING, Elmar, 97232 Giebelstadt (DE); HERZMAIER, Christian, 97076 Würzburg (DE)
(74) Vertreter: Witte, Weller & Partner Patentanwälte mbB
(86) Internationale Anmeldenummer: PCT/EP2014/069435
(87) Internationale Veröffentlichungsnummer: WO 2015/036503

(56) Entgegenhaltungen:
- WO-A1-2005/113389
- DE-A1-102006 057 266
- DE-A1-102010 060 864
- DE-A1-102012 102 075
- JP-A- H 092 623
- US-A- 3 670 867
- US-A- 5 322 406
- US-A1- 2004 200 692

## Beschreibung

Die vorliegende Erfindung betrifft ein Verfahren zum Kommissionieren einer Vielzahl von unterschiedlichen Artikeln gemäß Aufträgen, wobei vorzugsweise zumindest einer der Aufträge sowohl zerbrechliche als auch unzerbrechliche Artikel aufweist, die bruchsicher gemeinsam in einen Versandbehälter zu packen sind, in einem Lager- und Kommissioniersystem nach dem Ware-zum-Mann-Prinzip. Die Erfindung betrifft ferner ein entsprechendes Lager- und Kommissioniersystem sowie eine Pick-und-Pack-Station.

Unter dem Begriff "Kommissionieren" versteht man das Sammeln von Artikeln aus einem Lagersortiment und die Zusammenstellung der Artikel zu einem Auftrag eines Auftraggebers.

Auf dem Gebiet der Interlogistik gibt es im Wesentlichen zwei Prinzipien, nach denen Artikel innerhalb eines Lagers kommissioniert werden. Die Kommissionierung erfolgt entweder nach dem Prinzip "Mann-zur-Ware" oder nach dem Prinzip "Ware-zum-Mann". Beim Prinzip "Mann-zur-Ware" suchen Kommissionierpersonen bzw. Mitarbeiter die Artikel aus dem Lager zusammen, wobei die Kommissionierpersonen die statisch im Lager gelagerten Artikel einsammeln. Die Artikel können aber auch aus dem Lager zur Kommissionierperson gebracht werden. Dann spricht man vom "Ware-zum-Mann"-Prinzip. In diesem Zusammenhang werden Systeme mit dynamischer Artikelbereitstellung eingesetzt, wobei die Kommissionierpersonen einen ortsfesten Kommissionierplatz besetzt und dort über eine Fördertechnik mit Artikeln versorgt wird.

Außerdem gibt es eine Vielzahl von verschiedenen Kommissionierleitstrategien, die mit Begriffen wie z.B. "Pick-to-Belt", "Pick-by-Light", "Put-to-Light" bezeichnet werden.

Die Strategie "Pick-by-Light" bietet signifikante Vorteile gegenüber klassischen, manuellen Kommissioniertechniken, welche das Vorliegen von Lieferscheinen oder Rechnungen zum Zeitpunkt der Kommissionierung (Artikelentnahme und Artikelabgabe) erfordern. Bei Pick-by-Light-Systemen befindet sich ab jedem Zugriffsplatz eine Signallampe mit einem Ziffern- oder auch alphanummerischen Display sowie mit mindestens einer Quittiertaste und eventuell Eingabe- bzw. Korrekturtasten. Wenn ein Auftragsbehälter, in den hinein die Artikel aus z.B. Lagerbehältern abgelegt werden, an einer Kommissionierposition ankommt, so leuchtet an demjenigen Zugriffsplatz, aus welchem die Artikel bzw. Stückgüter zu entnehmen sind, die Signallampe auf. Auf dem Display erscheint die zu entnehmende Anzahl. Die Entnahme wird dann mittels der Quittiertaste bestätigt, und die Bestandsänderung kann in Echtzeit an ein Lagerverwaltungssystem zurückgemeldet werden. Oft arbeiten Pick-by-Light-Systeme nach dem Prinzip "Mann-zur-Ware". (Quelle: Wikipedia).

Des Weiteren ist eine beleglose Kommissionierung mittels "Pick-by-Voice" bekannt (Quelle: Wikipedia). Dort findet eine Kommunikation zwischen einer Datenverarbeitungsanlage und der Kommissionierperson mittels Sprache statt. Anstatt ausgedruckter Kommissionierlisten oder Datenfunkterminals (d.h. mobile Datenerfassungseinheiten (MDE), arbeitet die Kommissionierperson meistens mit einem Headset (Kopfhörer und Mikrofon), welches z.B. an einen handelsüblichen Pocket-PC angeschlossen werden kann. Die Aufträge werden von einem Lagerverwaltungssystem mittels Funk, meist mittels WLAN/WiFi, an die Kommissionierperson übermittelt. Üblicherweise umfasst eine erste Sprachausgabe das Regal, aus welchem Stückgüter entnommen werden sollen. Ist die Kommissionierperson dort angelangt, kann sie eine am Regal angebrachte Prüfziffer nennen, die es dem System erlaubt, eine Überprüfung des Zugriffsorts vorzunehmen. Wurde die richtige Prüfziffer genannt, wird der Kommissionierperson eine Entnahmemenge in Form einer zweiten Sprachausgabe genannt. Wenn das Regal mehrere Zugriffsplätze aufweist, bekommt die Kommissionierperson selbstverständlich auch den konkreten Zugriffsort in Form einer Sprachausgabe genannt. Nach einer Entnahme des zu kommissionierenden Stückguts bzw. der zu kommissionierenden Stückgüter quittiert die Kommissionierperson diesen Vorgang mittels Schlüsselwörtern, die von einer Datenverarbeitungseinrichtung mittels Spracherkennung verstanden werden.

Ferner unterscheidet man beim Kommissionieren aufgrund der gewählten Strategie zwischen auftrags- und artikelbezogenem Kommissionieren, wobei das Zusammenstellen der Artikel selbst entweder seriell, also nacheinander, oder parallel, also gleichzeitig stattfinden kann. Beim auftragsbezogenen Kommissionieren wird ein Auftrag als Ganzes bearbeitet, d.h. alle Artikel des Auftrags werden seriell zusammengestellt. Beim artikelbezogenen Kommissionieren dagegen wird jeder Auftrag von einer Kommissionierperson parallel bearbeitet, die jeweils nur einen Teil der Aufträge zusammenstellt bzw. sucht.

Auf welche Art und Weise kommissioniert wird, kann von vielen Faktoren abhängen. Ein Faktor, der sicherlich eine Rolle spielt, ist eine durchschnittliche Auftragsstruktur. Es macht einen Unterschied, ob verschiedene Artikel in kleinen Stückzahlen zu kommissionieren sind oder ob immer wieder gleiche Artikel in hohen Stückzahlen zu kommissionieren sind. Es kann also z.B. auf die sogenannte Zugriffshäufigkeit der zu kommissionierenden Artikel ankommen.

Ein weiteres Kriterium ist in der Beschaffenheit (Form, Gewicht, Oberfläche, Verpackung, Orientierung, etc.) der Artikel zu sehen. Einige Artikel lassen sich einfach und gut automatisiert kommissionieren (z.B. Arzneimittel in quaderförmigen Packungen), andere nicht (z.B. zylinderförmige Dosen).

Ferner ist relevant, ob die Artikel zerbrechlich oder unzerbrechlich sind. Zerbrechliche Artikel lassen sich nur schwer automatisiert handhaben. Zerbrechliche Artikel können ohne Füllmaterial nicht gemeinsam mit unzerbrechlichen Artikeln verschifft werden, da die Gefahr eines Bruchs besteht. Zerbrechliche Artikel können z.B. nicht über Sorter-Anlagen an Zielstellen verteilt werden, die als manuelle Packstationen dienen.

Es gibt Artikel, die im Vergleich zum restlichen Artikelsortiment überdimensioniert sind und deshalb nicht über eine konventionelle Fördertechnik vom Lager zu den Kommissionierplätzen transportiert werden können. Des Weiteren gibt es z.B. Artikel, die nur liegend transportiert werden können, wie es oft in der Modebranche der Fall ist (Liegeware).

Insbesondere ist die Handhabung von Aufträgen schwierig, die sowohl zerbrechliche als auch unzerbrechliche Artikel aufweisen. Um die zerbrechlichen Artikel zu schützen, werden häufig zusätzliche Füllmaterialien eingesetzt, wie z.B. Luftkissen, Chips oder dergleichen. Füllmaterialien und Polstermaterialien werden zum Ausfüllen von Hohlräumen in (Versand-)Kartons eingesetzt, um stoßempfindliche Packgüter stoßsicher und bruchsicher zu verpacken und zu fixieren. Dies ist nicht umweltfreundlich und außerdem teuer, wenn die Versandkosten volumenabhängig sind.

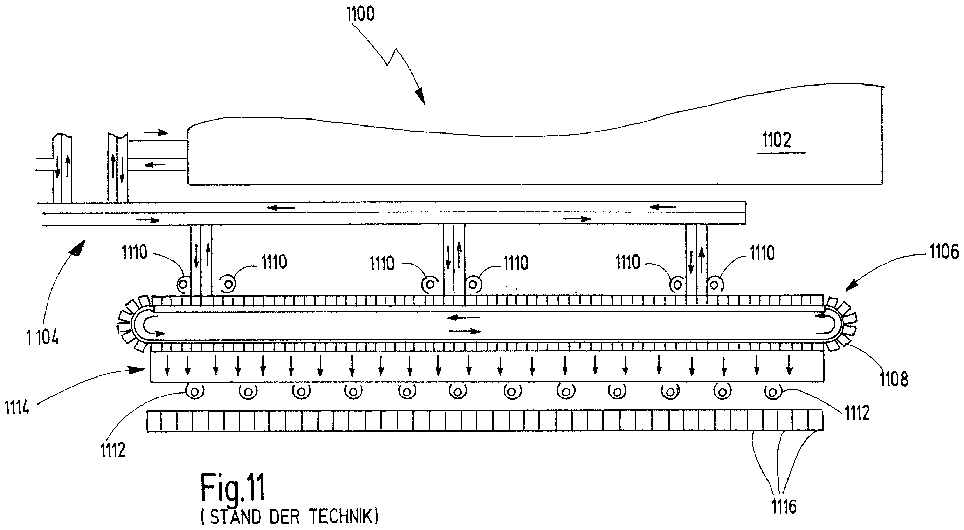

Noch schwieriger wird es, wenn viele der o.g. Faktoren gleichzeitig bei der Wahl eines geeigneten Kommissionierverfahrens berücksichtigt werden müssen. Ein Beispiel für derartig schwierige Bedingungen stellt z.B. ein Verteilzentrum eines Homeware-Händlers dar. Ein Homeware-Händler handelt u.a. mit Geschirr, Möbeln und allen anderen Arten von Ausstattungen, mit denen ein Haus oder eine Wohnung eingerichtet werden kann. Typische Homeware-Produkte sind: Gläser, Bestecke, Aufbewahrungsbehältnisse, Töpfe, Pfannen, Vasen, Leuchtmittel, Kerzen, Kerzenständer, Fensterrollos, Hocker, Netzadapter, Zangen, Küchenrollenhalter, Zeitschaltuhren, LED-Leuchten, Körbe, Haken, Gleiter, Flaschen, Öffner, Steckdosenleisten, Eiswürfelformen, Kleiderbügel, Bürsten, Trichter, Reiben, Milchschäumer, Scheren, Pinsel, Matratzen, Lattenroste, Kissen, Decken, Polster, Kopfkissen, Vorhänge, Taschen, Bettwäsche, Handtücher, Bademäntel, Teppiche, Spielzeug, Dekorationsgegenstände und dergleichen. Anhand dieser exemplarisch genannten Produkte ist es leicht zu verstehen, dass es beim Packen der Artikel eines Auftrags sehr darauf ankommt, dass die Artikel des Auftrags so in den Versandbehälter (z.B. Karton) gepackt werden, dass die zerbrechlichen Artikel während eines Transports zum Auftraggeber nicht kaputtgehen, d.h. bruchsicher gepackt sind. Die Vielzahl von zerbrechlichen Artikeln spricht beim Kommissionieren gegen den Einsatz von endlos umlaufenden Horizontalsortern, die üblicherweise an wenigen Aufgabepunkten manuell einzeln mit Artikeln bestückt werden. Üblicherweise weisen die Sorter endlos umlaufende Schalen auf, in die jeweils ein einziger Artikel gegeben wird, die dann später automatisiert an eine Zielstelle abgeschoben werden. Die Zielstellen sind häufig in Form von seitlich an den Sorter angrenzende Rutschen ausgebildet, in deren Endbereich verschiedene Artikel zum anschließenden Verpacken gesammelt werden (siehe auch Fig. 11). Um eine ausreichen hohe Kommissionierleistung (Picks/Stunde) zu gewährleisten, müssen die Sorter mit einer relativ hohen Geschwindigkeit umlaufen. Je höher die Umlaufgeschwindigkeit des Sorters ist, desto höher ist die Geschwindigkeit des auszuschleusenden Förderguts an der jeweiligen Zielstelle. Wird der Sorter mit einer zu hohen Geschwindigkeit betrieben, werden die Fördergüter beim Ausschleusen in die Zielstellen zerstört oder beschädigt. Verpackungen können z.B. verkratzen, was insbesondere bei höherpreisigen Gütern (z.B. Parfumflaschen) nachteilig ist. Reduziert man aber die Fördergeschwindigkeit der Sorter, müssen mehrere Sorter eingesetzt werden, um die gewünschte Leistung zu erzielen. Dies steigert wiederrum die Investitionskosten und den Platzbedarf. Außerdem kann es sein, dass in diesem Fall der gleiche Artikel auf mehrere Sorter aufgegeben werden muss, so dass eine nachgeschaltete (Auftrags-)Konsolidierung erforderlich sein kann. All dies ist nachteilig.

Die Anzahl der Zielstellen sind durch die Sorterlänge, oder aber auch durch das Gebäude begrenzt (große Radien erforderlich). Oftmals werden die Zielstellen mit geschalteten Unterteilungen ausgeführt, damit man mehr Zielstellen auf engsten Raum bekommt. Die Unterteilungen müssen wiederum exakt gesteuert werden und bei vertikalen Ausführungen wird hierdurch die Bruchgefahr noch mal erhöht. Sorter sind meist riesig, sperrig und können nicht ungehindert passiert werden. Je nach Leistungsfähigkeit (Geschwindigkeit) sind die Zielstellenbreiten schwierig zu ermitteln/zu wählen (Parabel). Prinzipiell ist es jedoch immer schwierig die Zielstellengröße, den Neigungswinkel, die Oberflächenbeschaffenheit (Material, Rauheit, Körnung) der Rutsche und damit die Kollisions- und Bruchgefahr zu reduzieren. Das Aufgeben der Artikel (Vereinzelung) erfolgt i.d.R. manuell, jedoch kann meist eine direkte und indirekte Aufgabe auf den Sorter gewählt werden (Inductions). Direkte Aufgabestellen behindern sich (Schalenzuteilung und Belegung) und die Aufgabeleistung sinkt sehr schnell ab. Bei geschlossenen Zielstellen (meist temporär) und bei Lese- und Zuteilungsfehlern kreisen die Artikel und belegen die Schalen. Die Sorterleistung wird wiederum reduziert. Durch mehrere Aufgabestellen kommen die Artikel durcheinander an der Zielstelle an. Um eine ausreichende Sortierqualität zu erhalten, sollten alle Artikel mit einem gut lesbaren Barcode ausgestattet sein und dieser wiederum sollte auf dem Sorter immer nach oben, gut lesbar zeigen. Deshalb sind teure Lesevorrichtung erforderlich.

Das Dokument US 3,670,867 A offenbart ein Förder- und Kommissioniersystem mit einer kombinierten Kommissionier- und -Pack-Station.

Das Dokument DE 10 2010 060 864 A1 offenbart ein Kommissionier- und Versandverfahren, das eine flexible Handhabung von kleinen, teuren oder empfindlichen Artikeln erlaubt.

Das Dokument JP H09 2623 A offenbart ein Verfahren zum Kommissionieren einer Vielzahl von unterschiedlichen Artikeln gemäß Aufträgen in einem Lager-und Kommissioniersystem nach dem Ware-zum-Mann-Prinzip, wobei das Lager- und Kommissioniersystem aufweist: ein Lager, in welchem die Artikel als typenreine Lagereinheiten gelagert sind; mindestens eine Pick-und-Pack-Station, die mehrere Sammelzonen aufweist und eingerichtet ist, mehrere der Artikel zu puffern sowie den Versandbehälter bereitzustellen; ein Fördersystem, das das Lager mit den Pick-und-Pack-Stationen verbindet; und eine Steuereinheit, die eingerichtet ist, den Pick-und-Pack-Stationen die Aufträge zuzuweisen, die Kommissionierung zu überwachen und einen Materialfluss zu steuern; wobei das Verfahren die folgenden Schritte aufweist: - Sammeln einer Vielzahl von Aufträgen; Fördern der Lagereinheiten über das Fördersystem aus dem Lager zu den Pick-und-Pack-Stationen; Entnehmen der zu den Pick-und-Pack-Stationen geförderten Artikel und auftragsorientiertes Verteilen der entnommenen Artikel auf die entsprechenden Sammelzonen, indem die entnommenen Artikel in den entsprechenden Sammelzonen abgelegt werden; und Packen der gesammelten Artikel in die Versandbehälter bei den entsprechenden Pick-und-Pack-Stationen.

Das Dokument JP H09 2623 A offenbart außerdem ein Lager- und Kommissioniersystem mit mindestens einer Pick-und-Pack-Station zum Kommissionieren einer Vielzahl von unterschiedlichen Artikeln gemäß Aufträgen, wobei die Pick-und-Pack-Station aufweist: eine Vielzahl von Sammelzonen wobei jede der Sammelzonen von einer ersten Seite zum Puffern der Artikel beladen und von einer zweiten, gegenüberliegenden Seite zum Packen des mindestens einen Versandbehälters entladen wird; eine Zuführung für leere Versandbehälter; einen Bereitstellungsort für den Auftragsladungsträger; eine Zuführeinrichtung für Lagereinheiten, die die zu kommissionierenden Artikel enthalten; eine Abführeinrichtung für die Lagereinheiten; und ein Kommissionierleitsystem, wobei das Lager- und Kommissioniersystem ferner aufweist: ein Lager, in welchem Lagereinheiten typenrein gelagert sind; und ein Fördersystem. Z

Es ist daher eine Aufgabe der vorliegenden Erfindung ein Lager- und Kommissioniersystem sowie eine Verfahren zum Kommissionieren von zerbrechlichen als auch unzerbrechlichen Artikeln bereitzustellen sowie einen Versandbehälter-Füllgrad zu optimieren.

Ein Verfahren zum Kommissionieren einer Vielzahl von unterschiedlichen Artikeln gemäß Aufträgen ist im Anspruch 1 definiert.

Ferner wird ein Verfahren zum Kommissionieren einer Vielzahl von unterschiedlichen Artikeln gemäß Aufträgen offenbart, wobei vorzugsweise zumindest einer der Aufträge sowohl zerbrechliche als auch unzerbrechliche Artikel aufweist, die bruchsicher gemeinsam in einen Versandbehälter zu packen sind, in einem Lager- und Kommissioniersystem nach dem Ware-zum-Mann-Prinzip, wobei das Lager- und Kommissioniersystem aufweist: ein Lager, in welchem die Artikel als typenreine Lagereinheiten gelagert sind; mindestens eine Pick-und-Pack-Station, die mehrere Sammelzonen aufweist und eingerichtet ist, mehrere der Artikel zu puffern sowie den Versandbehälter bereitzustellen; ein Fördersystem, das das Lager mit den Pick-und-Pack-Stationen verbindet; und eine Steuereinheit, die eingerichtet ist, den Pick-und-Pack-Stationen die Aufträge zuzuweisen, die Kommissionierung zu überwachen und einen Materialfluss zu steuern; wobei das Verfahren die folgenden Schritte aufweist: Sammeln einer Vielzahl von Aufträgen; batchorientiertes Analysieren der gesammelten Aufträge durch die Steuereinheit; batchorientiertes Zuweisen der analysierten Aufträge zu den Pick-und-Pack-Stationen durch die Steuereinheit, wobei jedem der analysierten Aufträge vorzugsweise eine der Sammelzonen zugewiesen wird; artikelorientiertes Fördern der Lagereinheiten über das Fördersystem aus dem Lager zu den Pick-und-Pack-Stationen; Entnehmen, vorzugsweise manuell, der zu den Pick-und-Pack-Stationen geförderten Artikel und auftragsorientiertes Verteilen der entnommenen Artikel auf die entsprechenden Sammelzonen, indem die entnommenen Artikel in den entsprechenden Sammelzonen abgelegt werden; und Packen der gesammelten Artikel in die Versandbehälter bei den entsprechenden Pick-und-Pack-Stationen.

Die vorliegende Erfindung ermöglicht die gemeinsame Kommissionierung von zerbrechlichen (weichen) und unzerbrechlichen (harten) diffusen Gütern, insbesondere ohne Füllmaterial. Der Füllgrad wird optimiert. Die Versandbehälter können mit deutlich mehr Artikeln gepackt werden (Füllgrad nahezu 100%). Die Kommissionierung erfolgt ohne den Einsatz von Sortern, weil die Sorter die zerbrechlichen Güter nicht transportieren können. Die zerbrechlichen Güter sind in diesem Sinne nicht sorterfähig. Die unzerbrechlichen Güter sind sorterfähig. Die nicht-sorterfähigen Güter würden während eines Transports auf einem Sorter beschädigt oder zerstört werden, weil die Transportgeschwindigkeiten zu hoch eingestellt werden müssten, um die gewünschte Kommissionierleistung zu erreichen, die mit der vorliegenden Erfindung erzielt wird. Spätestens beim Ausschleusen der nicht-sorterfähigen Güter würden die nicht-sorterfähigen Güter beschädigt oder zerstört werden, weil die Güter an den Ausschleuspunkten mit einer hohen Geschwindigkeit auf Führungswände oder Ausschleuseinrichtungen prallen würden. Die vorliegende Erfindung verzichtet vollständig auf den Einsatz von Sortern. Auf diese Weise lassen sich hohe Investitionskosten sowie Raum sparen, der üblicherweise zum Aufstellen eines Sorters benötigt wird. Mit der vorliegenden Erfindung wird eine optimierte Flächennutzung erreicht. Die Fördertechnik muss nicht in Form von Mäandern durch die Anlage geführt werden.

Die Pick-und-Pack-Stationen können beliebig innerhalb einer Anlage räumlich verteilt werden. Da auf den umlaufenden Sorter verzichtet wird, kann konventionelle Fördertechnik eingesetzt werden, um die Pick-und-Pack-Stationen mit den Artikeln zu versorgen, die zu kommissionieren sind.

Die Erfindung ermöglicht aber nicht nur die Handhabung von zerbrechlichen Gütern, sondern auch von überdimensionierten Gütern und nicht maschinell handhabbaren Gütern.

Im Vergleich zu den konventionellen Sorter-Lösungen kann bei der vorliegenden Erfindung außerdem ein sogenannter "Bündelpick" erfolgen. Wenn ein Auftrag mehrere Artikel eines gleichen Artikeltyps benötigt, ist es bei der Sorter-Lösung erforderlich, in viele der umlaufenden Sorterschalen jeweils einen einzigen Artikel abzulegen. Es können nicht mehrere Artikel gleichzeitig in die gleiche Sorterschale abgelegt werden, weil die Artikel, die dem Sorter batchorientiert zugeführt werden, später auf eine Vielzahl von Zielstellen verteilt werden müssen. Außerdem läuft der Sorter mit einer relativ hohen Geschwindigkeit endlos um, so dass es nur schwer möglich ist, mehrere Artikel gleichzeitig in ein und dieselbe Sorterschale abzulegen. Ferner besteht die Gefahr, dass sich mehrere Artikel in der gleichen Sorterschale während des Umlaufs aufgrund der hohen Geschwindigkeit gegenseitig beschädigen oder sogar zerstören. Bei der vorliegenden Erfindung werden die Artikel zwar batchorientiert zu den Pick-und-Pack-Stationen transportiert. Die Entnahme und Verteilung der Artikel erfolgt aber gebündelt. Dies bedeutet, dass mehrere Artikel gleichzeitig entnommen werden und mehrere Artikel gleichzeitig einer oder mehreren Zielstellen (Sammelzone) zugeführt bzw. dort abgelegt werden.

Außerdem ist es möglich, eine komplette Lagereinheit, die eine Vielzahl der benötigten Artikel enthalten kann, in einem einzigen Schritt auf der Zielstelle (Sammelzone) abzustellen. Bei der konventionellen Sorter-Lösung müssten alle Artikel der Lagereinheit in einem ersten Schritt vereinzelt und anschließend sukzessive zur Zielstelle transportiert werden, um dann einzeln dort abgelegt zu werden. Derartige Randbedingungen begrenzen die Leistung des herkömmlichen Sorters und lassen den Sorter damit für das vorliegende Kommissionierszenario ungeeignet erscheinen.

Ein weiterer Vorteil der Erfindung ist darin zu sehen, dass bei gleicher Kommissionierleistung weniger Personal als bei den konventionellen Sorter-Lösungen benötigt wird. Fig. 11 zeigt eine konventionelle Sorter-Lösung. Fig. 11 zeigt eine Draufsicht auf einen Teil eines Kommissioniersystems 1100 mit einem Kommissionierlager 1102, das über ein Fördersystem 1104 mit einem endlos umlaufenden Sorter 1106 verbunden ist, der eine Vielzahl von Sorterschalen 1108 aufweist. Der Sorter 1106 wird an einer ersten Längsseite von Mitarbeitern 1110 mit Artikeln bestückt, indem jeweils ein Artikel in eine Sorterschale 1108 gelegt wird. In der Fig. 11 sind insgesamt sechs Mitarbeiter 1110 zum Bestücken des Sorters 106 gezeigt. Auf der gegenüberliegenden Längsseite des Sorters 1106 sind zwölf Mitarbeiter 1112 gezeigt, die die Artikel aus einem Zielstellenbereich 1114 entnehmen und in (nicht gezeigte) Kartons packen. Der Zielstellenbereich 1114 weist eine Vielzahl von hier nicht näher dargestellten Zielstellen auf. Die Kartons werden nach einem abgeschlossenen Packvorgang auf Auftragspaletten 1116 gestapelt.

Bei den konventionellen Sorter-Lösungen, die grundsätzlich wie die Anlage der Fig. 11 aufgebaut sind, können die Mitarbeiter 1110 im Bedarfsfall nicht einfach auf die Seite der Mitarbeiter 1112 wechseln, um die Mitarbeiter 1112 zu unterstützen. Das Gleiche gilt natürlich in umgekehrter Richtung. Bei der vorliegenden Erfindung können die Picker und Packer ihre Positionen jedoch beliebig wechseln. Ferner ist es möglich, dass ein Picker sowohl die Aufgabe eines Pickers als auch die Aufgabe eines Packers erfüllt. Gleiches gilt für den Packer.

Bei einer besonderen Ausgestaltung weist jeder Auftrag mindestens eine Auftragszeile auf und die Entnahme erfolgt im Fall von Auftragszeilen gebündelt, die mehrere Artikel eines gleichen Artikeltyps umfassen.

Insbesondere erfolgt der Schritt des Packens derart, dass die zerbrechlichen Artikel des mindestens einen der Aufträge durch die unzerbrechlichen Artikel des mindestens einen der Aufträge gegen eine Zerstörung während eines späteren Transports gesichert sind.

Die Packer können individuell entscheiden, wie sie die zerbrechlichen und unzerbrechlichen Artikel in den Versandbehälter packen. Die Erfahrung der Packer wird ausgenutzt. Auf zusätzliches Füllmaterial kann während des Packens verzichtet werden. Die Packer packen den Versandbehälter volumenoptimiert. Dadurch lassen sich volumenabhängige Versandpreise reduzieren. Die Packer packen die Artikel so, dass die zerbrechlichen Artikel nicht kaputtgehen. Die zerbrechlichen Artikel werden durch die unzerbrechlichen Artikel "gepolstert".

Bei einer Ausführungsform wird eine ausreichende Menge von entnommenen Artikeln in den Sammelzonen gesammelt, um das bruchsichere Packen zu ermöglichen.

Schon während der Analyse eines Auftrags kann (grob) eine Reihenfolge festgelegt werden, in welcher die Artikel des Auftrags zu der zugeordneten Sammelzone transportiert werden. Auf diese Weise kann sichergestellt werden, dass in einem ersten Schritt nicht nur zerbrechliche Artikel in die Sammelzone gelangen, die dann nicht bruchsicher gepackt werden könnten, sondern dass immer ein geeigneter Mix an Artikeln in der Sammelzone ankommt.

Vorzugsweise wird jeder der Aufträge, insbesondere ohne zusätzliches Füllmaterial, in mindestens einen der Versandbehälter gepackt.

Schon während der Analyse wird festgelegt, welcher Artikel in dem oder den Versandbehältern vorhanden sein wird. Diese Information ist insbesondere bei einem grenzüberschreitenden Transport der Versandbehälter erforderlich. Somit können die Artikel von Anfang an verfolgt werden.

Der Schritt des Analysierens weist Folgendes auf: Analysieren von jedem der Aufträge hinsichtlich einer auftragsspezifischen Artikelmenge; Bestimmen eines auftragsspezifischen Packvolumens auf Basis der auftragsspezifischen Artikelmenge; Aufteilen der auftragsspezifischen Artikelmenge in eine oder mehrere Artikeluntermengen, vorzugsweise in Abhängigkeit von einem Quotienten aus dem auftragsspezifischen Packvolumen und einem Volumen eines Versandbehälters; und Zuweisen jeder der Artikeluntermengen zu dem entsprechenden Versandbehälter.

Schon während des Analyseschritts können die Artikel eines Auftrags so aufgeteilt werden, dass sie volumenoptimiert in die Versandbehälter passen. Diese Optimierung ist ohne weiteres möglich, da es vorzugsweise unterschiedliche dimensionierte Versandbehälter gibt. Die entsprechenden Daten sind in der Steuereinheit hinterlegt, auch die Volumendaten der Artikel. Die Aufteilung der Artikelmenge in Artikeluntermengen erlaubt das Packen der Artikel in mehrere Versandbehälter, wobei die Inhalte der Versandbehälter genau verfolgt werden können.

Ferner ist es von Vorteil, wenn Trennmarkierungen in der Sammelzone platziert werden für den Fall, dass die Artikel einer der Artikeluntermengen vollständig in der Sammelzone abgelegt sind. Auf diese Weise lassen sich Sammelbereiche definieren, die wiederum einzelnen Versandbehältern zugeordnet sind.

Die Trennmarkierungen stellen eine optische Hilfe zum Unterscheiden von Artikeln dar, die in unterschiedliche Versandbehälter eines einzigen Auftrags oder unterschiedlicher Aufträge gepackt werden müssen. Der Packer erkennt ohne weiteres, dass die Artikel, die sich in der Sammelzone befinden, auf mehrere Versandbehälter eines oder mehrerer Aufträge aufgeteilt werden sollen. Ferner ist es möglich, sollte es erforderlich sein, dass Artikel zwischen Versandbehältern - entgegen der ursprünglichen Planung (Volumenberechnung) - transferiert werden, diesen Transfer visuell zu verdeutlichen. Der Packer kann der Steuereinheit z.B. durch Scannen mitteilen, dass er Artikel zwischen verschiedenen Versandbehältern transferiert, indem die betroffenen Artikel über die Trennmarkierung hinweg zwischen verschiedenen Sammelbereichen transferiert werden. Somit ist eine für den Export benötigte Artikelverfolgung möglich. Es kann eine Rückmeldung an die Software zur Volumenberechnung zwecks kontinuierlicher Verbesserung der Planung gegeben werden.

Bei einer weiteren Ausgestaltung umfasst der Schritt des Packens: Packen der Artikel aus einem der Sammelbereiche in den zugewiesenen Versandbehälter; Prüfen, ob der zugewiesene Versandbehälter jeden der Artikel aus dem einen der Sammelbereiche aufnehmen kann; wenn der zugewiesene Versandbehälter nicht jeden der Artikel aus dem einen der Sammelbereiche aufnehmen kann; Ablegen von überschüssigen Artikeln in einen nachfolgenden Sammelbereich und Informieren der Steuereinheit über die abgelegten überschüssigen Artikel; oder wenn der zugewiesene Versandbehälter noch mehr als die Artikel aus dem einen der Sammelbereiche aufnehmen kann, entnehmen zusätzliche Artikel aus einem nachfolgenden Sammelbereich, Packen der zusätzlichen Artikel in den zugewiesenen Versandbehälter; bis der zugewiesene Versandbehälter vollständig gepackt ist, und Informieren der Steuereinheit über die Entnahme der zusätzlichen Artikel.

Diese Maßnahmen resultieren in einer volumenoptimierten Packung der Versandbehälter, wobei die Inhalte verfolgbar sind und durch den Packer frei wählbar bzw. bestimmbar sind, indem der Packer selbst entscheidet, welchen (kritischen) Artikel er in welchen der Versandbehälter packt.

Der Packer kann die fertig gepackten Versandbehälter insbesondere auftragsorientiert auf Auftragsladungsträgern, wie z.B. Paletten, stapeln. Alternativ können die Versandbehälter auch an einen Förderer abgegeben werden, der die Versandbehälter z.B. in einen Palettier- oder Versandbereich transportiert.

Die oben erwähnte Aufgabe wird ferner durch das im Anspruch 12 definierte Lager- und Kommissioniersystem zum Kommissionieren einer Vielzahl von unterschiedlichen Artikeln gemäß Aufträgen gelöst.

Das System weist folgendes auf: ein Lager, in welchem Lagereinheiten typenrein gelagert sind; ein Fördersystem, insbesondere eine Paletten-Fördertechnik und/oder eine Tablar-Fördertechnik; und eine Steuereinheit, die eingerichtet ist, den Analyseschritt und die Zuteilungsschritte des Anspruchs 1 durchzuführen.

Ferner ist es bevorzugt, wenn das System mindestens eine der folgenden Komponenten aufweist: einen Wareneingang, ein Langzeitlager, ein Hochregallager, ein Blocklager, eine Vereinzelungsstation, einen Depalettierer, ein Kurzzeitlager, ein Verteilsystem, einen Kommissionierbereich, einen Stapler, ein Regal, eine Schwerkraftbahn, und einen Warenausgang.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm zum Materialfluss;
- Fig. 2: eine perspektivische Teilansicht eines Lager- und Kommissioniersystems der Erfindung;
- Fig. 3: eine perspektivische Ansicht einer Vereinzelungsstation der Fig. 2;
- Fig. 4: eine perspektivische Ansicht einer Arbeitsplatzinsel der Fig. 2;
- Fig. 5: eine Vergrößerung des Bereichs V der Fig. 4;
- Fig. 6: ein Blockdiagramm zur Verdeutlichung von Zuweisungen und Aufteilungen;
- Fig. 7: ein Flussdiagramm eines Kommissionierverfahrens der Erfindung;
- Fig. 8: ein Flussdiagramm zur Erläuterung eines Analyseschritts;
- Fig. 9: ein Flussdiagramm zur Erläuterung eines Artikeltransfers zwischen unterschiedlichen Versandbehältern;
- Fig. 10: ein Flussdiagramm zur Erläuterung einer Aufteilung eines Auftrags auf mehrere Versandbehälter inkl. des Einsatzes einer Trennmarkierung; und
- Fig. 11: eine Draufsicht auf ein konventionelles Kommissioniersystem mit einem Sorter.

Unter einem "Artikel" wird nachfolgend eine Handhabungseinheit (Store Keeping Unit, SKU) verstanden, die eine bestimmte Anzahl, die auch lediglich ein einziges Stück betragen kann, gleicher Artikel umfasst, wobei diese gleichen Artikel miteinander verbunden sind (Verpackungseinheit) und eine Mindestabgabemenge für diesen Artikel darstellen. Eine Verbindung der eine Handhabungseinheit bildenden Anzahl gleicher Artikel, d.h. Artikel des gleichen Typs, kann z.B. durch eine gemeinsame Kunststoffummantelung erfolgen. Unter einem "Artikel" ist also ein bestimmtes Produkt in einer speziellen Verpackungsgröße zu verstehen.

Unter einer "Lagereinheit" wird nachfolgend eine bestimmte Anzahl, die auch lediglich ein einziges Stück betragen kann, gleicher Artikel verstanden, die "typenrein" gelagert werden. Der Begriff "typenrein" bedeutet, dass die Lagereinheit ausschließlich Artikel eines einzigen Typs aufweist. Selbstverständlich können Lagereinheiten, wie z.B. fachunterteilte Behälter, geometrisch unterteilt ausgebildet sein, um gleichzeitig auch mehrere Artikel typenrein zu bevorraten.

Das Kommissionieren hat zum Ziel, aus einer Gesamtmenge von Gütern (Sortiment) Teilmengen aufgrund von Anforderungen (Aufträgen) zusammenzustellen. Ein Auftrag besteht aus einer oder mehreren Auftragspositionen, die auch als Auftragszeilen bezeichnet werden. Eine Auftragszeile gibt eine jeweilige gewünschte Menge eines Artikeltyps an.

Eine "Batch" ist eine Zusammenfassung mehrerer Aufträge zu einem Verarbeitungslos. Eine "Batch" ist also eine Zusammenfassung von mehreren Aufträgen zu einer geordneten Menge oder Liste von Aufträgen. Im Batch-Betrieb werden Aufträge zunächst gesammelt und sortiert, um dann in einem Schub, d.h. in einer "Batch", verarbeitet zu werden. Die vorliegende Erfindung kommt insbesondere im Bereich des Handels über das Internet (B2B, B2C, etc.) zum Einsatz.

Eine Koordinierung der Abarbeitung von Aufträgen übernimmt ein Auftragsabwicklungssystem, das meist in einer Kommissioniersteuerung integriert ist, die z.B. auch ein Warenwirtschaftssystem aufweisen kann. Die Kommissioniersteuerung kann ferner eine (Lager-)Platzverwaltung sowie eine Informationsanzeige integriert haben. Die Kommissioniersteuerung wird üblicherweise durch eine Datenverarbeitungsanlage realisiert, die vorzugsweise zur verzögerungsfreien Datenübertragung und Datenverarbeitung im Online-Betrieb arbeitet.

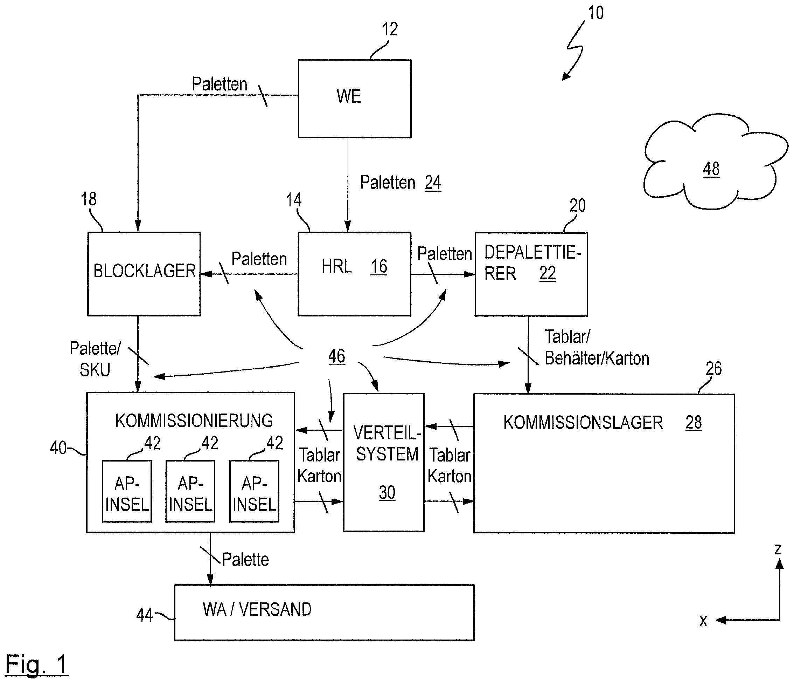

Fig. 1 zeigt ein Blockdiagramm inklusive eines Materialflusses eines Lager- und Kommissioniersystems 10 der vorliegenden Erfindung, das insbesondere von Homeware-Händlern genutzt wird.

Zu kommissionierende Artikel werden beispielsweise auf Paletten 24 an einen Wareneingang (WE) 12 geliefert. Von dort können die Artikel in ein (Langzeit-)Lager 14 gebracht werden, das im vorliegenden Fall exemplarisch als Hochregallager (HRL) 16 ausgebildet ist. Vom HRL 16 können, vorzugsweise typenreine, Paletten 24 zu einer oder mehreren Vereinzelungsstationen 20 gebracht werden, wie z.B. zu einem Depalettierer 22. Die Paletten 24 können vom HRL 16, oder aber auch direkt aus dem WE 12, in ein Blocklager 18 gebracht werden. Im Blocklager 18 werden die Paletten einzeln nebeneinander in der Fläche bereitgestellt.

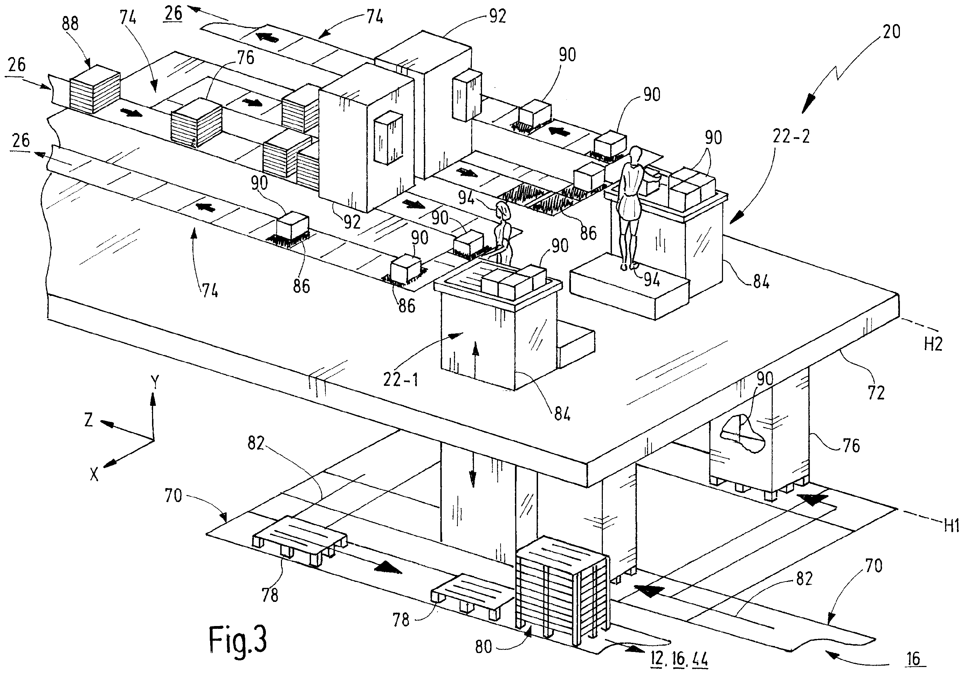

Der Depalettierer 22 vereinzelt die Paletten 24 in eine Vielzahl von hier nicht näher gezeigten Lagereinheiten 90, die mit oder ohne Ladehilfsmittel (Tablar 86, Behälter, Karton, etc.; siehe auch Fig. 3) zur Pufferung in ein (Kurzzeit-)Lager 26 gebracht werden, das im vorliegenden Fall ein Kommissionierlager 28 darstellt. Aus dem Kommissionierlager 28 werden die gepufferten Lagereinheiten 90 über ein Verteilsystem 30 in mindestens einen Kommissionierbereich 40 gebracht, wo eine oder mehrere Arbeitsplatzinseln (AP-Insel) 42 angeordnet sind. Einzelne Paletten 24 und/oder einzelne, vorzugsweise überdimensionierte, Artikel können dem Kommissionierbereich 40 aus dem Blocklager 18 zugeführt werden. Die Kommissionierung (Entnahme und Abgabe) erfolgt im Kommissionierbereich 40 manuell. Jede der AP-Inseln 42 kann eine oder mehrere Pick-und-Pack-Stationen 100 aufweisen, die unter Bezugnahme auf Fig. 3 noch näher beschrieben werden. In den AP-Inseln 42 werden Auftrags-Ladehilfsmittel, wie z.B. Paletten 108, mit den zu kommissionierenden Artikeln 104 bestückt. Die Artikel 104 werden in hier nicht näher gezeigte Versandbehälter 106 gepackt und dann auf den Auftragspaletten 108 gestapelt.

In der Fig. 1 werden die Auftragspaletten 108 aus dem Kommissionierbereich 40 in einen Warenausgang (WA) bzw. Versandbereich 44 gebracht. Von dort werden die Auftragspaletten 108 an die Auftraggeber transportiert.

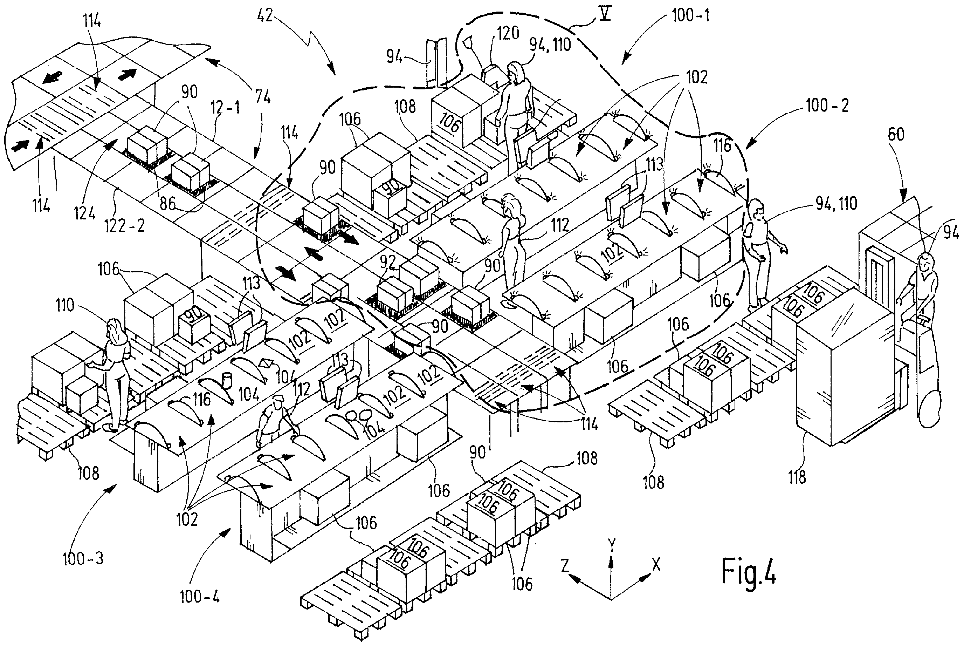

Innerhalb des Systems 10 der Fig. 1 werden die Artikel 104 (siehe auch Fig. 4) mittels eines Fördersystems 46 zwischen den verschiedenen Systemkomponenten 12, 14, 18, 20, 26, 40 und 44 transportiert. Das Fördersystem 46 kann viele verschiedene Komponenten aufweisen (Rollenförderer, Kettenförderer, Bandförderer, Hängeförderer, Shuttle, etc). Das Verteilsystem 30 kann Teil des Fördersystems 46 sein. Ein Materialfluss wird von einer übergeordneten Steuereinheit 48 geregelt, die zentral oder dezentral verteilt ausgebildet ist. Die Steuereinheit 48 ist zum Zwecke der Kommunikation mit den einzelnen Komponenten des Systems 10 drahtlos oder verdrahtet verbunden. Die Steuereinheit 48 ist dazu eingerichtet, Kommissioniervorgänge zu überwachen. Außerdem kann die Steuereinheit 48 weitere Aufgabe übernehmen, wie z.B. die Auftragsabwicklung, die Lagerplatzverwaltung, eine Implementierung von Kommissionierleitstrategien und dergleichen.

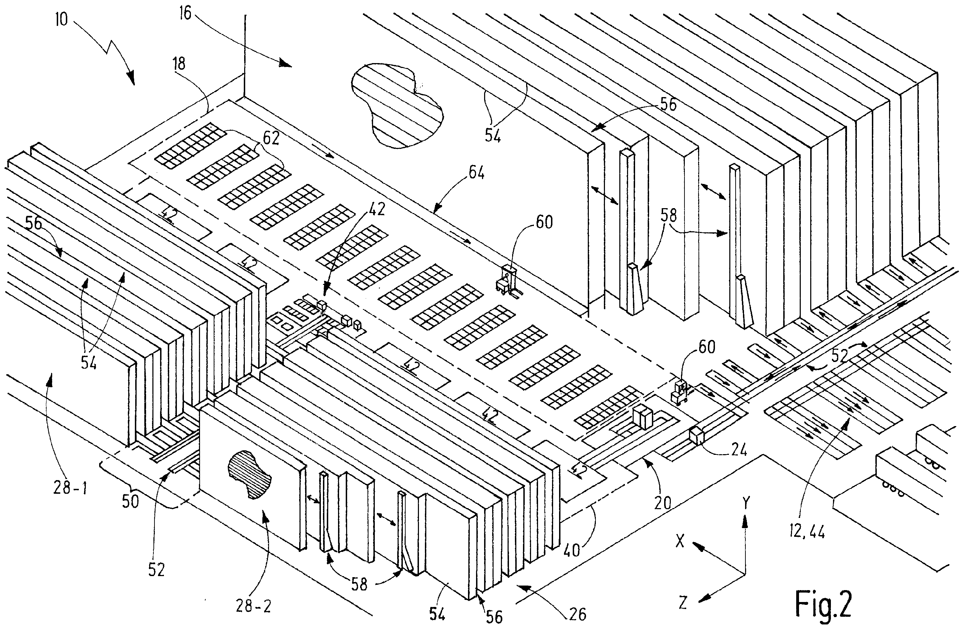

Fig. 2 zeigt eine perspektivische Teilansicht einer ersten Ausführungsform des Systems 10. Im oberen Bereich der Fig. 2 ist ein HRL 16 zur Bevorratung von Paletten 24 mit typenreinen Lagereinheiten 90 gezeigt. Im unteren Bereich der Fig. 2 sind exemplarisch zwei sich gegenüberliegende Kommissionierlager 28-1 und 28-2 angeordnet, die zwischen sich eine Vorzone 50 definieren, in der Teile des Fördersystems 46 angeordnet sind. Zwischen den Lagern 16 und 26 sind das Blocklager 18 sowie der Kommissionierbereich 40 angeordnet, die in der Fig. 2 jeweils mit einer Strichlinie umrandet sind. Exemplarisch ist zwischen dem Blocklager 18 und dem Kommissionierbereich 40 eine Vereinzelungsstation 20 angeordnet, die wiederum über Förderer 52 (z.B. Kettenförderer, Rollenförderer, Bandförderer, Elektrobodenbahn, Hängeförderer, Shuttle, fahrerlose Transportsysteme oder dergleichen) mit den Lagern 16 und 26 verbunden ist. Die Förderer 52 sind Teil des Fördersystems 46. Die Förderer 52 können auch in der Vorzone 50 angeordnet sein. Das Fördersystem 46 verbindet u.a. den Wareneingang 12 mit dem Lager 16 sowie den Warenausgang 44 mit dem Kommissionierbereich 40.

Die Lager 16 und 26 weisen üblicherweise Regale 54 auf, die zwischen sich Regalgassen 56 definieren. In den Regalgassen 56 bewegen sich höhen- und längsverstellbare Regalbediengeräte (RBG) 58 zum Zwecke einer Ein- und Auslagerung von Lagergütern (Paletten 24, Lagereinheiten 90, etc.). Bei den RBG 58 handelt es sich z.B. um schienengeführte Bediengeräte mit oder ohne Mast. Es können sogenannten Einebenen-Bediengeräte bzw. Shuttle eingesetzt werden, insbesondere im Lager 26, das als AKL (automatisiertes Kleinteilelager) ausgebildet sein kann. Wenn Shuttle eingesetzt werden, werden meistens auch Vertikalförderer bzw. -heber eingesetzt, um Höhenunterschiede zu überbrücken. Shuttle und Heber sind in der Fig. 2 nicht gezeigt.

Im Bereich des Blocklagers 18 und im Kommissionierbereich 40 können ferner flurgebundene Förderzeuge, wie z.B. Stapler 60, zum Transport von überdimensionierten Lagergütern und von Paletten 24 und 108 eingesetzt werden. In der Fig. 2 sind exemplarisch zwei Stapler 60 gezeigt. Die Stapler 60 können ganze Paletten 24 oder einzelne (überdimensionierte) Lagergüter von Palettenstellplätzen 62 im Blocklager 18 zu den Arbeitsplatzinseln 42 im Kommissionierbereich 40 transportieren. Der Kommissionierbereich 40 der Fig. 2 weist exemplarisch sechs Arbeitsplatzinseln 42 nebeneinander auf, von denen lediglich die mittlere in größerem Detail gezeigt ist. Die (Paletten-)Stellplätze 62 des Blocklagers 18 können z.B. von einer Schwerkraftbahn 64 mit neuen Paletten 24 versorgt werden, die wiederum Teil des Lagers 16 ist. Diese Paletten 24 können z.B. mit den Staplern 60 umgesetzt werden. Die Stapler 60 können fertig kommissionierte Auftragspaletten 108 von den Arbeitsplatzinseln 62 zum Fördersystem 46 transportieren, das die Auftragspaletten 108 wiederum zum WA 44 fördert.

Fig. 3 zeigt eine perspektivische Teilansicht der Vereinzelungsstation 20 der Fig. 2.

Die Vereinzelungsstation 20 ist exemplarisch auf zwei Höhenniveaus H1 und H2 angeordnet. Auf dem unteren Höhenniveau H1 (Hallenboden) ist z.B. eine Paletten-Fördertechnik 70 angeordnet. Auf dem oberen Höhenniveau H2 ist eine Plattform 72 mit exemplarisch zwei (manuellen) Depalettierern 22-1 und 22-2 angeordnet, die z.B. über eine Tablar-Fördertechnik 74 mit dem Lager 26 verbunden sind. Über die Paletten-Fördertechnik 70 werden beladene Paletten 76 und leere Paletten 78, auch in Form von Leerpalettenstapeln 80, zu und von den Depalettierern 22 gefördert. Eine Förderrichtung 82 ist durch dunkle Pfeile angedeutet. Die vollen und leeren Paletten 76 und 78 werden über Vertikalförderer in Schächten 84 zwischen den beiden Höhenniveaus H1 und H2 hin- und hertransportiert. Die Tablar-Fördertechnik 74 fördert Tablare 86, auch in Form Tablarstapeln 88, zu den Depalettierern 22 hin und fördert mit Lagereinheiten 90 beladene Tablare 86 von den Depalettierern 22 zum Kommissionierlager 26. Die Tablarstapel 88 werden mittels Entstaplern 92 automatisiert vereinzelt. Es versteht sich, dass der Einsatz der Paletten-Fördertechnik 70 sowie der Tablar-Fördertechnik 74 rein exemplarischer Natur ist. Die Lagereinheiten 90 können auch ladungsträgerlos transportiert und gelagert werden, insbesondere im Lager 26. Die Vereinzelung der Lagereinheiten 90 kann manuell durch Mitarbeiter 94 oder automatisiert mittels (nicht gezeigten) Depalettierrobotern erfolgen.

Fig. 4 zeigt eine perspektivische Teilansicht der mittleren Arbeitsplatzinsel 42 der Fig. 2.

Die Arbeitsplatzinsel 42 umfasst mindestens eine Pick-und-Pack-Station (PPS) 100. In der Fig. 4 sind exemplarisch vier PPS 100-1 bis 100-4 gezeigt. Jede der PPS 100 weist mindestens eine Sammelzone 102 auf. Die PPS 100 der Fig. 4 weisen jeweils sechs voneinander getrennte Sammelzonen 102 auf. Artikel 104 werden auftragsorientiert in die Sammelzonen 102 manuell abgelegt. Sobald ausreichend Artikel 104 in einer jeweiligen Sammelzone 102 abgelegt wurden, um bruchsicher packen zu können, werden die Artikel 104 in einen Versandbehälter 106 (z.B. Karton) gepackt, der bei der Sammelzone 102 bevorratet werden kann und der dem Kommissionierauftrag zugewiesen ist, dem auch die entsprechende Sammelzone 102 zugewiesen ist. Gepackte Versandbehälter 106 können z.B. auf einer Auftragspaletter 108 gestapelt werden, die in unmittelbarer Nähe zur PPS 100 bzw. zur Sammelzone 102 angeordnet ist. Die Auftragspalette 108 ist dann wiederum dem entsprechenden Auftrag zugewiesen.

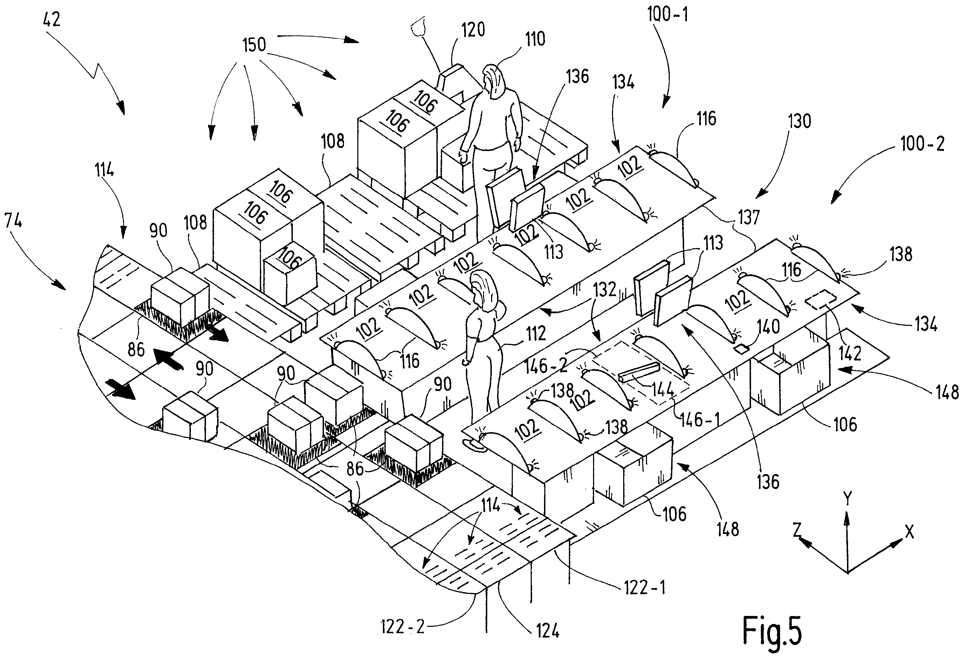

Die PPS 100 werden üblicherweise von zwei Mitarbeitern 94 bedient, nämlich einem Packer 110 und einem Picker 112. Der Picker 112 entnimmt die Artikel 104, vorzugsweise in Form eines Bündelpicks, aus den Lagereinheiten 90 und legt die Artikel 104 auftragsorientiert in die Sammelzonen 102 ab. In diesem Zusammenhang können bekannte Kommissionierleitstrategien eingesetzt werden, wie z.B. ein Put-to-Light-System, wie es nachfolgend unter Bezugnahme auf Fig. 5 noch näher erläutert werden wird. Dem Picker 112 wird eine Anzahl (Menge) der zu entnehmenden Artikel 104 sowie eine Ziel-Sammelzone 102 optisch angezeigt, wo der Picker 112 die entnommenen Artikel 104 abzulegen hat. Es versteht sich, dass dieser Vorgang vorzugsweise batchorientiert abläuft. Der Warenfluss ist vorab durch die Steuereinheit 48 so geplant, dass der Picker 112 bei der Arbeitsplatzinsel 42 möglichst viele Artikel 104 aus dem Lagerbehälter 90 entnehmen und auf die Sammelzonen 102 auftragsorientiert verteilen kann. Die Anzahl der zu entnehmenden Artikel 104 kann er beispielsweise über ein Display 113 (z.B. Bildschirm, Ziffernanzeige, etc.) angezeigt bekommen, das im Bereich der PPS 100 bzw. jeder der Sammelzonen 102 angeordnet ist.

Der Packer 110 ist dafür verantwortlich, die Artikel 104 aus den Sammelzonen 102 in die Versandbehälter 106 zu packen. Das Packen erfolgt manuell. Der Packer 110 entnimmt die Artikel 104 aus den Sammelzonen 102 und legt sie so in die Versandbehälter 106 ab, dass zerbrechliche Artikel 104 während eines späteren Transport zum Auftraggeber nicht beschädigt werden. Eine absolute (räumliche) Beladekonfiguration wird also somit üblicherweise nicht durch die Steuereinheit 48 vorgegeben, sondern lediglich eine volumen- und/oder mengenspezifische Konfiguration. Der Packer 110 entscheidet individuell und situationsbedingt, wie die Artikel 104 aus der Sammelzone 102 in die zugewiesenen Versandbehälter 106 zu packen sind.

Die PPS 100-1 und 100-2 sind vorzugsweise so angeordnet, dass sie sich parallel zueinander erstrecken, wobei sich der Picker 112 zwischen den PPS 100-1 und 100-2 bewegen kann. Die PPS 100-1 und 100-2 sind insbesondere senkrecht zur Tablar-Fördertechnik 74 orientiert, die die Lagereinheiten 90 mit oder ohne Tablare 86 zum Picker 112 transportiert und vom Picker 112 wieder zurück in Richtung des Lagers 26 (vergleiche Fig. 2) oder zu einer anderen PPS 100 transportiert. In der Fig. 4 sind exemplarisch drei Bahnen 122 und 124 gezeigt, die im unmittelbaren Bereich der PPS 100 angeordnet sind. Die beiden äußeren Bahnen sind Zuführbahnen 122 und grenzen unmittelbar an die PPS 100 an. Die mittlere Bahn bzw. Strecke 124 ist eine zentrale Abführbahn 124, über die angebrochene Lagereinheiten 90 zurück ins Lager 26 oder zu anderen PPS 100 transportiert werden können. Über die mittlere Abführbahn 124 können auch leere Tablare 86 zurück zum Lager 26 oder zum Depalettierer 22 transportiert werden. Es versteht sich, dass das Lager 26 in diesem Fall ein Tablarlager ist. Wenn die Lagergüter 90 ladungsträgerlos innerhalb des Systems 10 bewegt werden, könnte das Lager 26 z.B. ein Fachbodenregal mit gerippten Fachböden sein. Zwischen den einzelnen Bahnen bzw. Strecken 122 und 124 der Tablar-Fördertechnik 74 können ferner Umsetzer 114 (z.B. Riemenheber o.Ä.) vorgesehen sein, um die Lagereinheiten 90 und/oder die Tablare 86 zwischen den verschiedenen Bahnen 122 und 124 zu transferieren.

Die Packer 110 arbeiten üblicherweise gegenüberliegend zu den Pickern 112 entlang den Außenseiten 134 (siehe auch Fig. 5) der PPS 100. Die PPS 100 sind in der Fig. 4 in Form von Tischen 137 mit horizontal orientierten ebenen Oberflächen ausgebildet. Die Sammelzonen 102 werden in der Längsrichtung der Tische durch vertikale Barrieren 116 physisch voneinander getrennt, die sich in der Querrichtung des Tisches 137 erstrecken. An den Barrieren 116 können Leuchtmittel vorgesehen sein, die ein Put-to-Light-System implementieren und unter Bezugnahme auf Fig. 5 noch näher erläutert werden.

Es versteht sich, dass jede der PPS 100 von mindestens einem Mitarbeiter 94 bedient wird, der sowohl die Aufgabe des Packers 110 als auch die Aufgabe des Pickers 112 übernehmen kann. Die PPS 100-1 und 100-2 werden jeweils von einem Packer 110 betrieben, wobei für beide PPS 100-1 und 100-2 nur ein einziger Picker 112 eingesetzt wird. Beide PPS 100-3 und 100-4 werden von einem einzigen Picker 112 betrieben. Die PPS 100-3 wird zusätzlich von einem Packer 110 betrieben. Die Packvorgänge bei der PPS 100-4 werden jedoch von der gleichen Person ausgeführt, nämlich dem Picker 112, der zu diesem Zweck um den Tisch 137 herumläuft, um auf die gegenüberliegende Seite zu kommen, wo die Packvorgänge stattfinden.

Wenn ein Auftrag größere Stückmengen umfasst, z.B. vollständige Lagereinheiten 90, so können die Lagereinheiten 90 vom Picker 112 und/oder vom Packer 110 direkt von der Bahn 122 auf die Auftragspalette 108 geladen werden. Eine Vereinzelung der Lagereinheiten 90 in einzelne Artikel 104 und ein Zwischenlagern in den Sammelzonen 102 ist in diesem Fall nicht erforderlich. Ähnliches gilt für überdimensionierte Artikel 118, die vorzugsweise aus dem Blocklager 18 (vergleiche Fig. 2) mittels der Stapler 60 direkt auf den entsprechenden Auftragspaletten 108 abgesetzt werden. Die Stapler 60 können vollständig kommissionierte Auftragspaletten 108 von dem PPS 100 abholen und entweder an das Fördersystem 46 (vergleiche Fig. 2) abgeben oder direkt in den Warenausgang 44 (vergleiche Fig. 1 und 2) transportieren. Alternativ können die Auftragspaletten 108 auch manuell transportiert werden, wie z.B. mit einem Hubwagen 120.

Die Fig. 5 zeigt eine Vergrößerung des mit einer Strichlinie umrandeten Bereichs "V" der Fig. 4.

In der Fig. 5 sind die beiden Zuführstrecken 122-1 und 122-2 sowie die dazwischen angeordnete zentrale Abführstrecke 124 für die Tablare 86 bzw. Lagereinheiten 90 teilweise gezeigt. Die PPS 100-1 und 100-2 sind im Detail gezeigt. Die PPS 100-1 und 100-2 erstrecken sich im Wesentlichen entlang einer Längsrichtung X des Systems 10. Die Fördertechnik 74 erstreckt sich im Wesentlichen entlang einer Querrichtung Z des Systems 10.

Zwischen den PPS 100-1 und 100-2 erstreckt sich eine Gasse 130, in der sich der Picker 112 bewegen kann, um entnommene Artikel 104 in die Sammelbereiche 102 zu legen. Der Picker 112 legt die entnommenen Artikel 104 von einer ersten (Längs-)Seite 132 in die Sammelzonen 102. Der Packer 110 entnimmt von einer zweiten, gegenüberliegenden (Längs-)Seite 134 die abgelegten und gepufferten Artikel 104, um die Artikel 104 in die Versandbehälter 106 zu packen. Die Sammelzonen 102 sind z.B. auf einer Oberseite eines ebenen Tischs 137 definiert. Die Sammelzonen 102 liegen z.B. in der Längsrichtung X benachbart nebeneinander. Die Sammelzonen 102 sind durch die Barrieren 116 physisch voneinander getrennt, um eine Vermengung von entnommenen Artikeln 102 zu verhindern. Die Barrieren 116 können so ausgestaltet sein, dass man sie in der Längsrichtung x beliebig versetzen kann, um die Breite der Sammelzonen 102 zu variieren. Die Länge der Sammelzonen 102 in der Querrichtung Y kann beliebig gewählt werden. Jeder der Sammelzonen 102 ist mindestens ein Auftrag zugeordnet. Jedem Auftrag ist auch mindestens ein Versandbehälter 106 zugeordnet.

Die Picker 112 und Packer 110, aber insbesondere die Packer 110, werden über ein Kommissionierleitsystem bei den Entnahme-, Ablage- und Packvorgängen unterstützt. In der Fig. 5 ist das Kommissionierleitsystem durch ein Put-to-Light-System 136 implementiert. Das Put-to-Light-System 136 weist ein oder mehrere Anzeigen, wie z.B. die Displays 113, auf, um dem Picker 112 eine Anzahl von zu entnehmenden und abzulegenden Artikeln 104 anzuzeigen. Auch der Ablageort kann angezeigt werden. Ferner weist das Put-to-Light-System 136 Lampen 138 auf, die vorzugsweise an den Barrieren 116 angeordnet sind, um dem Picker 112 anzuzeigen, in welche der Sammelzonen 102 die entnommenen Artikel 104 abzulegen sind. Sowohl auf der ersten Seite 132 als auch auf der zweiten Seite 134 können eine oder mehrere (Quittier-)Tasten 140 vorgesehen sein, vorzugsweise bei jeder Sammelzone 102, um der Steuereinheit 48 (siehe Fig. 1) den Abschluss eines Teilvorgangs (z.B. Ablage eines Artikeltyps in eine bestimmte Sammelzone 102) mitzuteilen. In der Fig. 5 ist lediglich eine einzige Taste 140 exemplarisch gezeigt. Das Gleiche gilt für einen Scanner 142, der durch eine Strichlinie angedeutet ist. Mit dem oder den Scannern 142 kann der Steuereinheit 48 mitgeteilt werden, welcher Artikeltyp gerade gehandhabt wird. Dies ist insbesondere in Fällen wichtig, wenn einer der Versandbehälter 106 entweder nicht ausreichend Artikel 104 enthält, um bruchsicher gepackt zu werden, oder zu viele Artikel 104 in der Sammelzone 102 liegen, die gar nicht alle in den zugeordneten Versandbehälter 106 gepackt werden können. In diesen Fällen kann es erforderlich sein, zusätzliche Artikel 104 in einen der Versandbehälter 106 zu packen, die eigentlich gar nicht in diesen Versandbehälter 106 gehören, oder Artikel 104, die eigentlich in diesen Versandbehälter 106 gehören, in einen anderen Versandbehälter 106 zu packen.

In der Fig. 5 ist in einer der mittleren Sammelzonen 102 der unteren PPS 100-2 eine (mobile) Trennmarkierung 144 gezeigt, die die Sammelzone 102 physisch und optisch in zwei voneinander getrennte Sammelbereiche 146-1 und 146-2 trennt. Der Sammelbereich 146-1 kann einem ersten Versandbehälter 106 zugeordnet sein, wohingegen der zweite Sammelbereich 146-2 einem zweiten Versandbehälter 106 zugeordnet sein kann. Der Picker 112 entnimmt zuerst die Artikel 104 für den ersten Versandbehälter 106 und legt diese in die Sammelzone 102. Sobald der Picker 112 alle Artikel 104 entnommen und abgelegt hat, kann er über das Display 113 angezeigt bekommen, dass die Trennmarkierung 144 in der entsprechenden Sammelzone 102 zu platzieren ist. Der Picker 112 legt dann die Trennmarkierung 144 in die Sammelzone 102 und unterteilt die Sammelzone 102 somit in einen ersten Sammelbereich 146-1 und einen zweiten Sammelbereich 146-2, die in der Fig. 5 durch eine Strichlinie umrandet angedeutet sind. Danach kann der Picker 112 weitere Artikel 104 aus den Lagereinheiten 90 entnehmen und in den zweiten Sammelbereich 146-2 ablegen. Dieser Artikel 104 aus dem zweiten Sammelbereich 146-2 können anschließend von einem der Packer 110 in einen zweiten Versandbehälter 106 gepackt werden.

Wenn nun, wie oben beschrieben, zu viele oder zu wenige Artikel 104 in den Sammelbereichen 146 bzw. der Sammelzone 102 vorhanden sind, kann der Packer 110 die Artikel 104 zwischen den Sammelbereichen 146-1 und 146-2 transferieren. Die entsprechende Information über den oder die Transfers übermittelt der Packer 110 an die Steuereinheit 48, indem er die zu transferierenden Artikel 104, und vorzugswiese nur diese, über den Scanner 142 scannt.

Die Versandbehälter 106, die zum Packen der Artikel 104 benötigt werden, werden über eine Zuführeinrichtung 148 am Packplatz bereitgestellt. In der Fig. 5 werden die leeren Versandbehälter 106 z.B. unterhalb des Tischs 137 angedient. Der Packer 110 kann die zu packenden Artikel 104 entweder direkt dort in die Versandbehälter 106 packen. Alternativ kann der Packer 110 den leeren Versandbehälter 106 auf die entsprechende Auftragspalette 108 stellen, die an einem der Bereitstellungsorte 150 platziert ist. Die Sammelzonen 102 sind allgemein flexibel hinsichtlich ihrer geometrischen Größe auslegbar, genau wie die Versandbehälter 106. Die Bereitstellungsorte 150 liegen vorzugsweise der zweiten Seite 134 der PPS 100 direkt gegenüber. Insbesondere sind genauso viele Bereitstellungsorte 150 vorgesehen, wie Sammelzonen 102 vorhanden sind. Selbstverständlich kann dieses Verhältnis auch abgeändert werden. In der Fig. 5 sind lediglich fünf Bereitstellungsorte 150 für sechs Sammelzonen 102 vorgesehen, da jeder Auftragspalette 108 ein oder mehrere Sammelzonen 102 zugeordnet sein können.

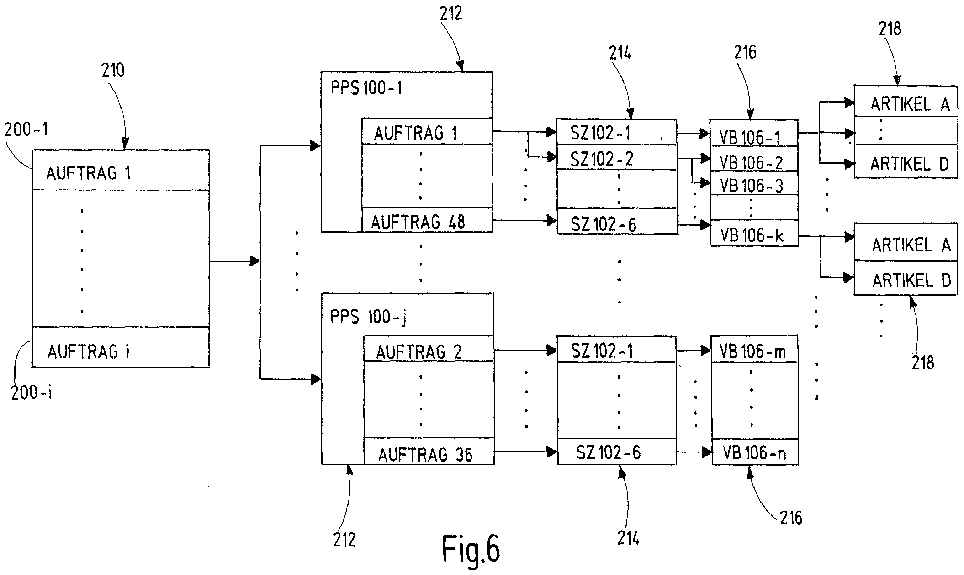

Fig. 6 zeigt die Zuweisungen und Aufteilungen von Aufträgen 200 auf die Pick-und-Pack-Stationen 100, Sammelzonen 102, und Versandbehälter 106. Das Blockdiagramm der Fig. 6 wird von links nach rechts erklärt werden.

Der Block 210 stellt eine Gesamtheit von gesammelten Aufträgen 200-1 bis 200-i dar, wobei i eine beliebige ganze Zahl ist. Wie es später noch erläutert werden wird, werden die Aufträge 200 gesammelt, um anschließend auf die Pick-und-Pack-Stationen 100-1 bis 100-j aufgeteilt werden, die in den Blöcken 212 angedeutet sind. Jede der Pick-und-Pack-Stationen 100 bekommt mindestens einen Auftrag 200 zur Bearbeitung durch die Steuereinheit 48 zugewiesen. Die Zuweisung wird durch die Steuereinheit 48 vorgenommen, wie es nachfolgend noch näher erläutert werden wird. Die Pick-und-Pack-Station 100-1 hat u.a. den "Auftrag 1" und den "Auftrag 48" zugewiesen bekommen. Die Pick-und-Pack-Station 100-j hat u.a. den "Auftrag 2" und den "Auftrag 36" zugewiesen bekommen.

Aus den Blöcken 214 geht die Zuweisung bzw. Zuordnung der Aufträge 200 zu den Sammelzonen 102 hervor. So wurden beispielsweise dem "Auftrag 1" an der Pick-und-Pack-Station 100-1 die Sammelzonen 102-1 und 102-2 zugewiesen. Dem "Auftrag 48" wurde (nur) die Sammelzone 102-6 zugewiesen. Jedem der Aufträge 200 wird mindestens eine Sammelzone 102 zugewiesen.

Die Blöcke 216 repräsentieren die Zuordnung zwischen den Sammelzonen 102 und den Versandbehältern 106. Der Sammelzone 102-1 ist beispielsweise der Versandbehälter 106-1 zugeordnet. Der Sammelzone 102-2 sind die beiden Versandbehälter 106-2 und 106-3 zugeordnet. Der Sammelzone 102-6 ist der Versandbehälter 106-k zugeordnet. Es versteht sich, dass jeder Sammelzone 102 mindestens ein Versandbehälter 106 zugeordnet ist.

Die Blöcke 218 repräsentieren Auftragszeilen der Aufträge 200, die in entsprechend zugewiesene Versandbehälter 106 gepackt werden. Der Versandbehälter 106-1 wurde z.B. dazu bestimmt, u.a. die Artikel A und D in hier nicht näher angegebenen Stückzahlen aufzunehmen. Auch der Versandbehälter 106-k ist zum Aufnehmen der Artikel A und D bestimmt. Hier kommt die batchorientierte Bearbeitung und Vorbereitung der Aufträge 200 klar zum Ausdruck. Die Artikel A und D werden an der Pick-und-Pack-Station 100-1 batchorientiert bearbeitet, indem sie auftragsorientiert auf verschiedene Sammelzonen 102 verteilt werden, wie es nachfolgend noch näher erläutert werden wird.

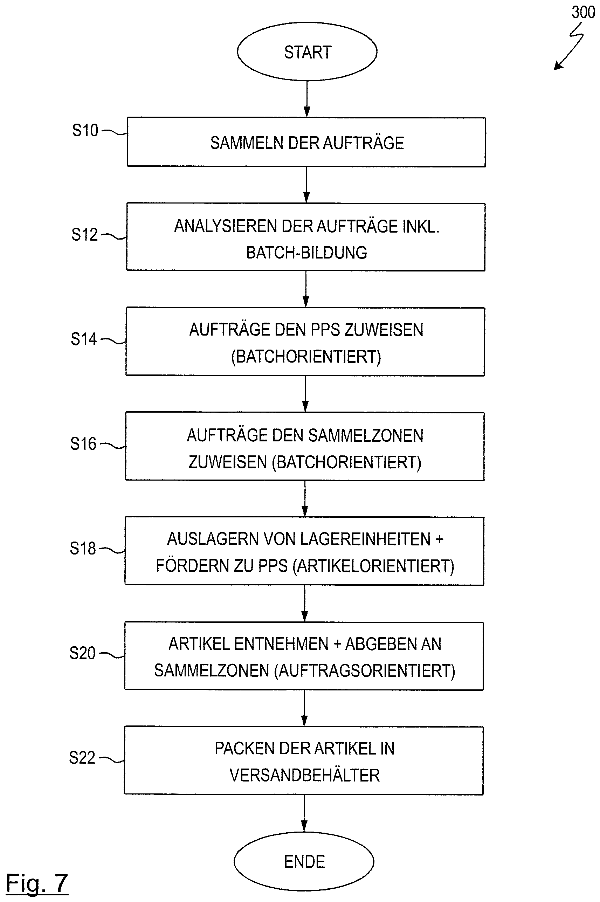

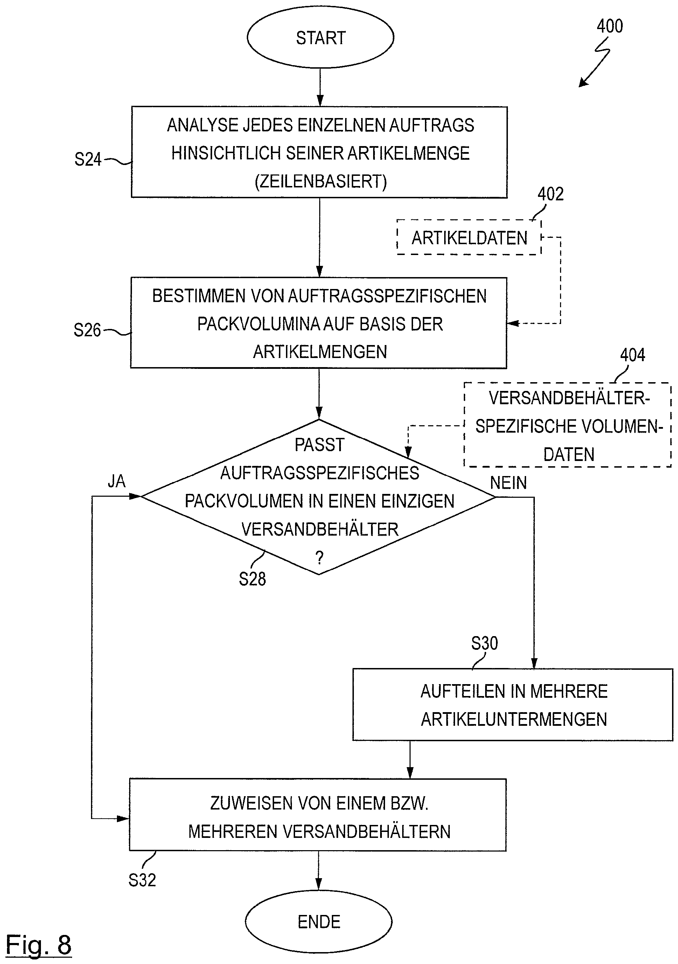

Bezugnehmend auf Fig. 7 wird nachfolgend ein Flussdiagramm 300 beschrieben werden, welches ein Verfahren zum Kommissionieren von unterschiedlichen Artikeln gemäß Aufträgen 200 repräsentiert, wobei zumindest einer der Aufträge 200 sowohl zerbrechliche Artikel 104 als auch unzerbrechliche Artikel 104 aufweist. Es ist die Aufgabe des Packers 110 die Artikel 104 so in den jeweiligen Versandbehälter 106 zu packen, dass die zerbrechlichen Artikel 104 durch die unzerbrechlichen Artikel 104 gegen Bruch gesichert sind. Das Flussdiagramm 300 der Fig. 7 zeigt das Verfahren der Erfindung generell. Spezielle Aspekte des Verfahrens werden nachfolgend unter Bezugnahme auf die Fig. 8 bis 10 beschrieben werden.

In einem ersten Schritt S10 der Fig. 7 werden die Aufträge 200 gesammelt, um in einem nachfolgenden Schritt S12 analysiert zu werden. Die Analyse des Schritts S12 hat zum Ziel, die Aufträge 200 den PPS 100 bzw. den Sammelzonen 102 batchorientiert zuzuweisen. In diesem Zusammenhang kann eine räumliche Verteilung der PPS 100 innerhalb des Kommissionierbereichs 40 berücksichtigt werden. Auch eine räumliche Verteilung der Sammelzonen 102 innerhalb ein- und derselben PPS 100 kann berücksichtigt werden. Die Aufträge 200 werden so auf die PPS 100 bzw. deren Sammelzonen 102 verteilt, dass die Lagereinheiten 90 aus dem Lager 26 weg- und/oder pickoptimiert durch das System 10 über das Fördersystem 46 transportiert werden. Sobald die Analyse des Schritts S12 abgeschlossen ist, werden die Aufträge 200 den PPS 100 zugewiesen. Diese Zuweisung erfolgt im Schritt S14 ebenfalls batchorientiert. Sobald die Aufträge 200 dem PPS 100 zugewiesen sind, können die Aufträge 200 den Sammelzonen 102 der jeweiligen PPS 100 zugewiesen werden. Dies erfolgt in einem Schritt S16. Wenn die Schritte S12 bis S16 abgeschlossen sind, ist die Verteil- bzw. Zuweisungsstruktur der Fig. 6 festgelegt.

Danach werden in einem Schritt S18 der Fig. 7 die, vorzugsweise typenreine, Lagereinheiten 90 aus den Lagern 14, 18 und/oder 26 ausgelagert und über das Fördersystem 46 zu den PPS 100 gefördert. Die Auslagerung und die Förderung erfolgt artikelorientiert. Sobald die Artikel 104 an dem PPS 100 angekommen sind (vergleiche Fig. 4), werden die Artikel 104 aus den Lagereinheiten 90 entnommen, auf die jeweiligen Sammelzonen 102 verteilt und in den entsprechenden Sammelzonen 102 abgelegt (Schritt S20). Die Entnahme, Verteilung und Abgabe erfolgt auftragsorientiert. Die Entnahme, Verteilung und Abgabe kann durch das Kommissionierleitsystem unterstützt werden, indem beispielsweise die Lampen 138 der jeweiligen Kommissionierzonen 102 aktiviert werden, in die die Artikel 104 der jeweiligen Lagereinheit 90 abzulegen sind. Die Quittierung der Abgabe kann optional erfolgen.

Sobald eine ausreichende Menge von Artikeln 104 in einer jeweiligen Sammelzone 102 gepuffert ist, kann der Packer 110 die gepufferten Artikel 104 in bereitgestellte und zugeordnete Versandbehälter 106 packen. Das Packen erfolgt vorzugsweise bruchsicher.

In Fig. 8 ist ein Flussdiagramm 400 gezeigt, welches den Analyseschritt S12 der Fig. 7 näher beschreibt.

In einem Schritt S24 kann jeder einzelne Auftrag 200 hinsichtlich seiner Artikelmenge (Auftragszeilen) analysiert werden. Die Analyse erfolgt vorzugsweise zeilenbasiert, wobei jede Auftragszeile eine typenreine Menge eines Artikels angibt, die ein Auftraggeber bestellt hat. Zusammen mit Artikeldaten 402 können auf diese Weise auftragsspezifische Packvolumina in einem Schritt S26 bestimmt werden. Die Artikeldaten 402 können in hier nicht näher gezeigten Datenbanken in der Steuereinheit 48 hinterlegt sein. Da in dieser Datenbank auch versandbehälterspezifische Volumendaten 404 hinterlegt sein können, kann vorab geplant werden, welche Artikel 104 eines Auftrags 200 mengen- bzw. volumenmäßig in welchen Versandbehälter 106 passen. Es versteht sich, dass unterschiedlich dimensionierte Versandbehälter 106 bereitgestellt werden können, um diese Optimierung zu erleichtern. Die Versandbehälter 106 sollen möglichst vollständig, und vorzugsweise ohne zusätzliches Füllmaterial, mit zerbrechlichen und unzerbrechlichen Artikeln gepackt werden, insbesondere bruchsicher.

Der entsprechende Planungsalgorithmus, der von der Steuereinheit 48 ausgeführt wird, kann deshalb in einem Schritt S28 abfragen, ob ein auftragsspezifisches Packvolumen in einen einzigen Versandbehälter 106 hineinpasst. Wenn die Artikelmenge nicht in einen einzigen Versandbehälter 106 passt, wird die Artikelmenge in einem Schritt S30 in mehrere Artikeluntermengen aufgeteilt. Diese Aufteilung erfolgt wiederum auf Basis eines Volumenvergleichs (siehe auch Schritt S26). Auf jeden Fall wird der Artikelmenge bzw. den Artikeluntermengen in einem Schritt S32 ein oder mehrere Versandbehälter 106 zugewiesen.

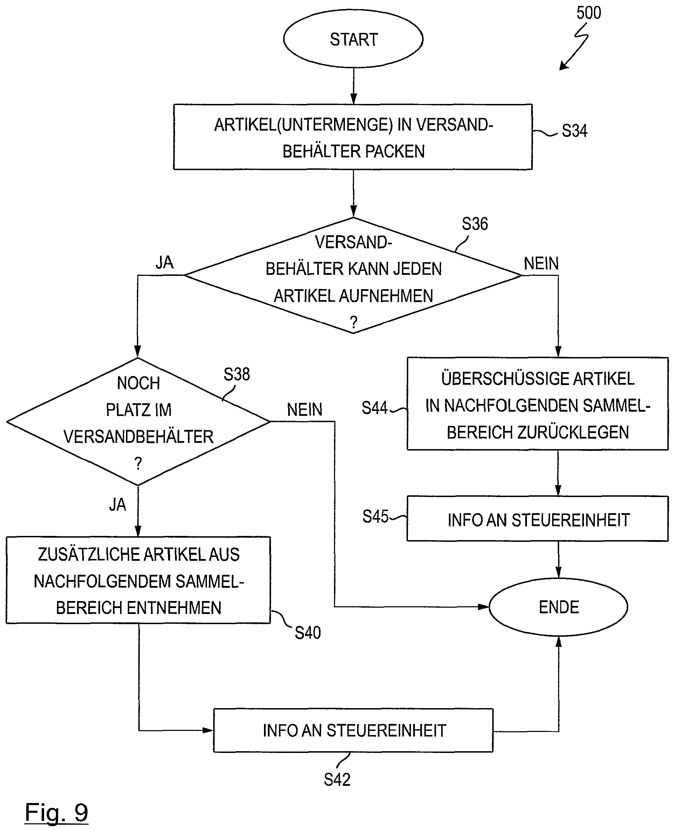

Fig. 9 zeigt ein Flussdiagramm 500, welches den Verfahrensschritt S22 der Fig. 7 genauer erläutert.

In einem Schritt S34 der Fig. 9 werden die Artikel bzw. Artikeluntermengen in die entsprechenden Versandbehälter 106 gepackt. Wenn sich beim Packen herausstellt (vergleiche Schritt 36), dass alle Artikel 104 in den dafür vorgesehenen Versandbehälter 106 passen, kann in einem Schritt S38 geprüft werden, ob dieser Versandbehälter 106 noch weitere Artikel 104 aufnehmen kann. Kann er keine weiteren Artikel 104 aufnehmen, so war die Vorabplanung zutreffend und das Verfahren endet. Wenn jedoch noch Platz in diesem Versandbehälter 106 ist, können zusätzliche Artikel 104 z.B. aus einem nachfolgenden Sammelbereich entnommen und entgegen der ursprünglichen Planung ebenfalls in diesen Versandbehälter 106 gepackt werden (siehe Schritt S40). Auf diese Weise wird sichergestellt, dass die Versandbehälter 106 so kompakt wie möglich mit den Artikeln 104 gepackt werden. Auf diese Weise wird insbesondere das bruchsichere Packen sichergestellt. In diesem Fall wird die Steuereinheit 48 in einem Schritt S42 (z.B. durch Scannen) darüber informiert, welche Artikel 104 und wie viele Artikel 104 dieses Typs dem nachfolgenden Sammelbereich 146 entnommen und in den aktuellen Auftrag 200 gegeben wurden.

Wenn in der Abfrage des Schritts S36 festgestellt wird, dass der Versandbehälter 106 nicht alle Artikel 104 aufnehmen kann, die er gemäß der Planung aufnehmen soll, können in einem Schritt S44 die übrig gebliebenen Artikel 104, die nicht in diesen Versandbehälter 106 gepackt werden konnten, in einen nachfolgenden Sammelbereich 146 zurückgelegt werden. Selbstverständlich können diese Artikel auch in eine benachbarte Sammelzone 102 gelegt werden. In diesem Fall informiert der Packer 110 die Steuereinheit 48 jedoch über diesen Artikeltransfer, z.B. indem die transferierten Artikel 104 zuvor mit dem Scanner 142 eingelesen werden. Dies erfolgt im Schritt S46.

Der Packvorgang 500 ist also relativ flexibel gegenüber Abweichungen von der geplanten Beladung der Versandbehälter 106. Im täglichen Leben kann es immer wieder vorkommen, dass die Packer 110 von gewöhnlichen Packgepflogenheiten abweichen, was generell von der Steuereinheit 48 nicht von vornherein rechnerisch abgefangen werden kann. Dennoch ist das System 10 ausreichend flexibel, auf solche Abweichungen zu reagieren.

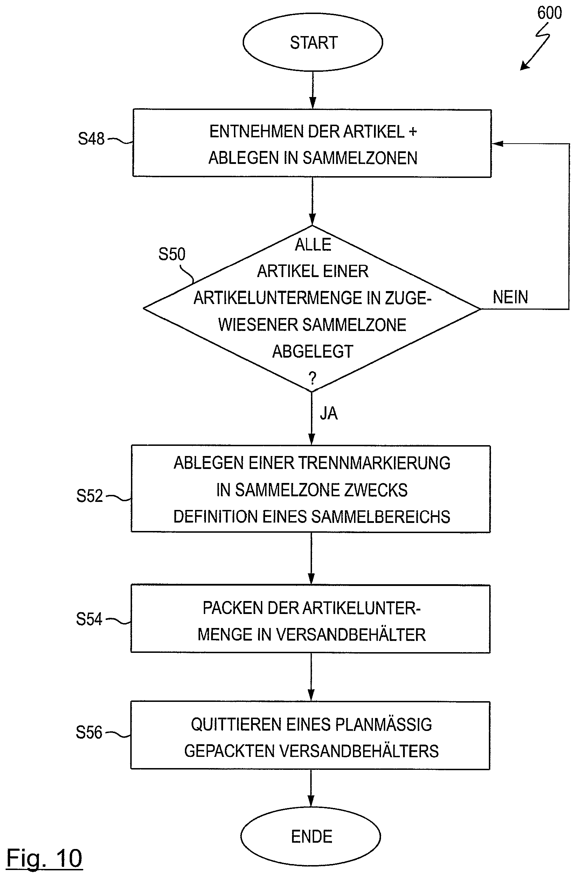

Fig. 10 zeigt ein Flussdiagramm 600, das den Schritt S20 des Flussdiagramms 300 der Fig. 7 für den Fall näher erläutert, dass ein Auftrag 200 in mehrere Versandbehälter 106 gepackt bzw. in mehrere Sammelbereiche 146 aufgeteilt wird.

Wie üblich werden die Artikel 104 an der PPS 110 in einem ersten Schritt S48 der Fig. 10 entnommen und auftragsorientiert in den entsprechenden Sammelzonen 102 abgelegt.

Sobald alle Artikel 104 einer Artikeluntermenge in einer zugewiesenen Sammelzone 102 abgelegt sind (siehe Abfrage S50), kann eine Trennmarkierung 144, wie z.B. ein Kunststoffstab, eine Holzleiste, oder Ähnliches in die Sammelzone 102 abgelegt werden, um Sammelbereiche 146 zu definieren. Für die neue Sammelzone 146 beginnt das Verfahren dann wieder beim Schritt S48.

Anschließend werden in einem Schritt S54 die Artikel 104 der Artikeluntermenge in den zugeordneten Versandbehälter 106 gepackt. Sobald der Versandbehälter 106 vollständig gepackt ist, kann der Packer 110 das Ende des Packvorgangs gegenüber der Steuereinheit 48 quittieren (siehe Schritt S56).

Es versteht sich, dass die Ablage der Trennmarkierung 144 in die Sammelzone 102 (siehe Schritt S52) dem Picker 112 durch das Kommissionierleitsystem mitgeteilt werden kann.

Die Aufträge 200 liegen üblicherweise als Datensätze vor. Ein Auftrag 200 kann ein Kopffeld, ein Prioritätsfeld und/oder ein Artikelfeld aufweisen. Das Kopffeld kann u.a. Informationen zum Kunden, der eine Bestellung aufgegeben hat, (Kunden-)Adresse oder eine (Kunden-)Identifikationsnummer sowie eine Bestell-/Auftragsnummer aufweisen. Das Prioritätsfeld enthält Angaben darüber, ob es sich um einen normalen Auftrag oder einen Eilauftrag handelt. Ein Eilauftrag ist ein Auftrag mit hoher (Bearbeitungs-)Priorität, der üblicherweise vorrangig von normalen Aufträgen behandelt wird und auch erst nachträglich der Analysemenge hinzugefügt werden kann. Das Artikelfeld weist Auftragszeilen auf. Jede Auftragszeile weist zumindest Angaben über eine Stückzahl eines bestellten Artikels und über einen Artikeltyp auf. Bei den Artikeln kann es sich um Stückgüter oder um Cases handeln.

Eine Koordinierung der Abarbeitung von Aufträgen wird durch ein Auftragsabwicklungssystem erledigt, das in Form von Hardware und/oder Software in die Steuereinheit 48 integriert ist. Die Auftragsabwicklung kann auch ein Warenwirtschaftssystem aufweisen. Die Steuereinheit 48 kann ferner eine (Lager-)Platzverwaltung sowie eine Informationsanzeige integriert haben. Die Steuereinheit 48 wird üblicherweise durch eine Datenverarbeitungsanlage realisiert, die vorzugsweise zur verzögerungsfreien Datenübertragung und Datenverarbeitung im Online-Betrieb arbeitet.

Oben wurde also ein Konzept beschrieben, dass die drei Schritte des Pickens, Packens und Palettierens vereint. Nachfolgend werden spezifische Vorteile zusammengefasst, die mit den einzelnen Schritten im Vergleich zu konventionellen Kommissioniersystemen verbunden sind:
- Picker 112 kann aus unterteilten Lagerbehältern, aber auch aus Mischbehältern (wie z.B. Retourwaren) picken.
- Picker 112 kann gleichzeitig auch z.B. zehn Artikel 104 entnehmen und dann drei, vier, zwei und einen Artikel 104 nach Anzeige auf die Sammelzonen 102 verteilen, wobei er nur einen Weg zurücklegt.
- Picker 112 muss nicht wie z.B. bei der Sorterlösung Einzelstücke der Reihe nach auflegen. Die Abgabe der gesamten Menge ist auf einmal möglich.
- Bei einer Bündelentnahme ist die Pickleistung höher (maßgebend sind hier die Auftragszeilen und nicht die zu sortierenden Stück). Der Pickfaktor ist erhöht.
- Artikel 104 müssen nicht wie z.B. beim Sorter verfolgt werden. Vorliegend erfolgt eine direkte physikalische Zuordnung ohne Zwischenmedium (wie z.B. Sorterschale, Pick-Cart, Pick-to-Belt-Systeme, etc.).
- Artikel 104 mit Übergröße bzw. -gewicht oder schwer zu handhabende Artikel 104 (z.B. rollende Teile) können problemlos gepickt und direkt verteilt werden.
- Die Anzahl der Sammelzonen 102, deren Anordnung sowie deren Größe und Beschaffenheit sind völlig individuell gestaltbar, konfigurierbar und erweiterbar.
- Der Picker 112 kann die Aufträge jeweils mit einer individuell und frei beweglichen Trennmarkierung 144 (Balken) sichtbar, logisch und physikalisch voneinander abtrennen.
- Die Artikel 104 können in den Sammelzonen 102 übereinander und nebeneinander angeordnet werden (evtl. bereits grobe Vorsortierung für den nachfolgenden Packer 110).
- Bei (vorzeitigem) Erreichen eines gedachten (Pack-)Volumens muss die "Zielstelle" (Sammelzone 102) im Vergleich zu einem Sorter nicht geschlossen oder unterteilt werden. Im Vergleich zu einem Kommissioniersammelbehältnis muss der Auftrag nicht abgebrochen werden.
- Jede Sammelzone 102 kann mehrere Aufträge gleichzeitig individuell aufnehmen. Der Picker 112 setzt nach Systemvorgabe die Trennmarkierungen 144 in der jeweiligen Sammelzone 102 ab.
- Priorisierte Aufträge kann der Picker 112 dem Packer 110 unmittelbar mitteilen (bzw. sind für beide sichtbar). Anzeigen etc. können entfallen.
- In Peakzeiten (Volumen, Kollektionswechsel, etc.) können mehrere Sammelzonen 102 zu einer einzigen Sammelzone 102 zusammengefügt werden (Verbreiterung durch Entnahme der Barriere 116). Im Schwachlastbetrieb (Nachlieferungen) werden nur pickplatznahe Sammelzonen 102 angesprochen/genutzt (Wegoptimierung).
- Picker 112 und Packer 110 sind "ein Team" und können sich gegenseitig abwechseln oder unterstützen ("job rotation").
- In erster Linie packt der Packer 110 aus der vorzugsweise ebenen Fläche zwecks beschädigungsfreier Bereitstellung aller Arten von Artikeln 104.
- Da dem Packer 110 die Artikel 104 wie in einer Auslage präsentiert werden, kann er eine individuelle und optimale Packfolge selbst bestimmen. Es ist kein Packfolgegenerator erforderlich. Es wird eine höchste Effizienz durch situative Packoptimierung erreicht. Es muss somit keine Sequenz geliefert werden (schwer unten, leicht oben, etc.).
- Hohlräume im Versandbehälter 106 kann der Packer 110 "ausstopfen" und dadurch das Packvolumen erheblich reduzieren, was eine Füllgradoptimierung zur Folge hat.
- Packer 110 muss nicht extra durch Anzeige auf abgeschlossene Aufträge hingewiesen werden. Durch die Trennmarkierung 144 herrscht eine erhöhte Übersichtlichkeit für Picker 112 und Packer 110.
- Leer gewordene Lager-Kartons können vom Picker 112 direkt an den Packer 110 zur Verwendung als Versandbehälter 106 weitergegeben werden.
- Der Packer 110 muss nicht wie z.B. bei der konventionellen Sorterlösung eine geschlossene Zielstelle bzw. einen Auftrag sofort packen um die Zielstelle frei zu geben (entstehen von mehreren Sorterumläufen) sondern nur, wenn der Tisch 137 überläuft.
- Der Packer 110 (wie auch der Picker 112) hat einen Überblick über alle Sammelzonen 102 (von jedem Ort aus) und entscheidet nach eigenem Ermessen, wo er arbeiten muss.
- Full-Cases, Uglys, und Oversized-Artikel 104 kann der Packer 110 direkt (ohne Pickvorgang) auf die Auftragspalette 108 hinter ihm stellen und palettieren.
- Alle Mitarbeiter haben eine freie Sicht über die gesamte Anlage (gute Atmosphäre und Ergonomie), keine Sichtbarrieren durch Sorter.
- Beliebige kompakte Anordnung und Übersichtlichkeit der Arbeitsinseln 42. Keine Bindung der Anordnung nach einem zwingenden Sorterverlauf/Streckenführung (Biegeradien und Richtungsänderungen begrenzt). Bei Einsatz von AGV's sind die Inseln beliebig in der Halle (auch innerhalb der Ebenen) verteilbar.
- Eine Begrenzung auf konventionelle Sorter-Zielstellen (abhängig von max. Sorterlänge) und -Leistung ist nicht gegeben, sondern nahezu beliebig ausbau- und gestaltbar.
- Konventionelle Sorter werden für spezielle Anwendungsfälle ausgewählt (Kippschale, Tilt-Tray, Quergurt-Sorter, Kamm-Sorter, Schuhsorter, Dreharm-Sorter, Push-Sorter, Pop-up Sorter, Röllchenweichen-Sorter, Schwenksorter, Kanalsorter, etc.) und sind somit immer eingeschränkt auf das Sortierspektrum und die Leistungsfähigkeit, wobei aber immer Einzelstücke sortiert (verteilt) werden. Die Erfindung ist davon unabhängig.
- Artikelkennzeichnung: Bei der Erfindung kann der einzelne Artikelbarcode entfallen. Einzelstücke werden nicht gelesen. Die Zuordnung erfolgt direkt vom Bereitstellungskarton zur Sammelzone 102. Ein Tracking der Artikel 104 kann entfallen (Fehlerreduzierung durch weniger Systemhandhabung).
- Vorliegend handelt es sich um eine Ein-Stopp-Strategie. Eine Konsolidierung ist nicht erforderlich. Für alle Artikel 104 kann das Picken, Packen und Palettieren an einem einzigen Ort erfolgen.

In der Beschreibung der Figuren wurden gleiche Einheiten, Komponenten, Merkmale mit den gleichen Bezugszeichen bezeichnet. Abgewandelte Gegenstände wurden mit abgewandelten Bezugszeichen bezeichnet. Die Figuren wurden gemäß den in der (Intra-)Logistik üblichen Bezeichnungen benannt, so dass die Längsrichtung mit X, die Querrichtung mit Z und die (vertikale) Höhe mit Y bezeichnet wurden. Lage- und Orientierungsangaben (wie z.B. "oben", "unten", "seitlich", "längs", "quer", "horizontal", "vertikal" oder dergleichen) sind auf die unmittelbar beschriebene Figur bezogen. Bei einer Änderung der Lage oder Orientierung sind die Angaben aber sinngemäß auf die neue Lage bzw. Orientierung zu übertragen.

### Bezugszeichenliste:

- 10: Lager- und Kommissioniersystem
- 12: Wareneingang (WE)
- 14: (Langzeit-)Lager
- 16: Hochregallager
- 18: Blocklager
- 20: Vereinzelungsstation
- 22: Depalettierer
- 24: Paletten
- 26: (Kurzzeit-)Lager
- 28: Kommissionierlager
- 30: Verteilsystem
- 40: Kommissionierbereich
- 42: Arbeitsplatz-Insel (AP-Insel)
- 44: Warenausgang/Versandbereich
- 46: Fördersystem
- 48: Steuereinheit
- 50: Vorzone
- 52: Förderer
- 54: Regale
- 56: Gasse
- 58: Regalbediengeräte (RBG)
- 60: Stapler
- 62: Palettenstellplatz
- 64: Schwerkraftbahn
- H: Höhenniveau
- 70: Paletten-Fördertechnik
- 72: Plattform
- 74: Tablar-Fördertechnik
- 76: beladene Palette
- 78: leere Palette
- 80: Leerpalettenstapel
- 82: Förderrichtung
- 84: Schacht
- 86: Tablar
- 88: Tablarstapel
- 90: Lagereinheit
- 92: Entstapler
- 94: Mitarbeiter

- 100: Pick-und-Pack-Station (PPS)
- 102: Sammelzone
- 104: Artikel
- 106: Versandbehälter
- 108: Auftragspalette
- 110: Packer
- 112: Picker
- 113: Display
- 114: Umsetzer
- 118: überdimensionierter Artikel
- 116: Barriere
- 120: Hubwagen
- 122: Zuführstrecke
- 124: Abführstrecke

- 130: Gang
- 132: 1. Seite von 100
- 134: 2. Seite von 100
- 136: Put-to-Light-System / Kommissionierleitsystem
- 137: Tisch
- 138: Lampen
- 140: Tasten
- 142: Scanner
- 144: Trennmarkierung
- 146: Sammelbereich
- 148: Zuführung für 106
- 150: Bereitstellungsart für 108

- 200: Auftrag
- 210: Block
- 212: Block
- 214: Block
- 216: Block
- 218: Block
- 300: Kommissionierverfahren
- 400: Analyseverfahren
- 402: Artikeldaten (Volumen)
- 404: Volumendaten

- 1100: Kommissioniersystem
- 1102: Kommissionierlager
- 1104: Fördersystem
- 1106: Sorter
- 1108: Sorterschale
- 1110: Mitarbeiter
- 1111: Mitarbeiter
- 1112: Mitarbeiter
- 1114: Zielstellenbereich
- 1116: Auftragspaletten

## Patentansprüche

1. Verfahren (300) zum Kommissionieren einer Vielzahl von unterschiedlichen Artikeln (104) gemäß Aufträgen (200), wobei zumindest einer der Aufträge (200) sowohl zerbrechliche als auch unzerbrechliche Artikel (104) aufweist, die bruchsicher gemeinsam in einen Versandbehälter (106) zu packen sind, in einem Lager-und Kommissioniersystem (10) nach dem Ware-zum-Mann-Prinzip, wobei das Lager- und Kommissioniersystem (10) aufweist: ein Lager (14; 18; 26), in welchem die Artikel (104) als typenreine Lagereinheiten (90) gelagert sind; mindestens eine Pick-und-Pack-Station (100), die mehrere Sammelzonen (102) aufweist und eingerichtet ist, mehrere der Artikel (104) zu puffern sowie den Versandbehälter (106) bereitzustellen; ein Fördersystem (46), das das Lager (14; 18; 26) mit den Pick-und-Pack-Stationen (100) verbindet; und eine Steuereinheit (48), die eingerichtet ist, den Pick-und-Pack-Stationen (100) die Aufträge (200) zuzuweisen, die Kommissionierung zu überwachen und einen Materialfluss zu steuern; wobei das Verfahren (300) die folgenden Schritte aufweist:
Sammeln (S10) einer Vielzahl von Aufträgen (200);
batchorientiertes Analysieren (S12) der gesammelten Aufträge (200) durch die Steuereinheit (48);
batchorientiertes Zuweisen (S14) der analysierten Aufträge (200) zu den Pick-und-Pack-Stationen (100) durch die Steuereinheit (48), wobei jedem der analysierten Aufträge (200) eine der Sammelzonen (102) zugewiesen wird;
artikelorientiertes Fördern (S18) der Lagereinheiten (90) über das Fördersystem (46) aus dem Lager (14; 18; 26) zu den Pick-und-Pack-Stationen (100);
Entnehmen (S20) der zu den Pick-und-Pack-Stationen (100) geförderten Artikel (104) und auftragsorientiertes Verteilen der entnommenen Artikel (104) auf die entsprechenden Sammelzonen (102), indem die entnommenen Artikel (104) in den entsprechenden Sammelzonen (102) abgelegt werden; und
Packen (S22) der gesammelten Artikel (104) in die Versandbehälter (106) bei den entsprechenden Pick-und-Pack-Stationen (100);
wobei der Schritt des Analysierens (S12) aufweist:
Analysieren (S24) von jedem der Aufträge (200) hinsichtlich einer auftragsspezifischen Artikelmenge;
Bestimmen (S26) eines auftragsspezifischen Packvolumens auf Basis der auftragsspezifischen Artikelmenge;
Aufteilen (S30) der auftragsspezifischen Artikelmenge in eine oder mehrere Artikeluntermengen; und
Zuweisen (S32) jeder der Artikeluntermengen zu dem entsprechenden Versandbehälter (106).

2. Verfahren nach Anspruch 1, wobei der Schritt des Entnehmens manuell erfolgt.

3. Verfahren nach Anspruch 1 oder 2, wobei jeder Auftrag (200) mindestens eine Auftragszeile aufweist und wobei die Entnahme (S20) im Fall von Auftragszeilen, die mehrere Artikel (104) eines gleichen Artikeltyps umfassen, gebündelt erfolgt.

4. Verfahren nach Anspruch 1, 2 oder 3, wobei der Schritt des Packens (S22) derart erfolgt, dass die zerbrechlichen Artikel (104) des mindestens einen der Aufträge (200) durch die unzerbrechlichen Artikel (104) des mindestens einen der Aufträge (200) gegen eine Zerstörung während eines späteren Transports gesichert sind.

5. Verfahren nach einem der Ansprüche 1 bis 4, das den Schritt aufweist:
Sammeln von ausreichenden Mengen von entnommenen Artikeln (104) in den Sammelzonen (102), um ein bruchsicheres und/oder füllgradoptimiertes Packen zu ermöglichen.

6. Verfahren nach einem der Ansprüche 1 bis 5, wobei jeder der Aufträge (200) in mindestens einen der Versandbehälter (106) gepackt wird.

7. Verfahren nach Anspruch 6, wobei jeder der Aufträge (200) ohne zusätzliches Füllmaterial in mindestens einen der Versandbehälter (106) gepackt wird.

8. Verfahren nach einem der Ansprüche 1 bis 7, wobei das Aufteilen (S30) der auftragsspezifischen Artikelmenge in eine oder mehrere Artikeluntermengen in Abhängigkeit von einem Quotienten aus dem auftragsspezifischen Packvolumen und einem Volumen eines Versandbehälters (106) erfolgt.

9. Verfahren nach Anspruch 1, das, falls die auftragsspezifische Artikelmenge auf mehrere der Versandbehälter (106) aufgeteilt wird, folgende Schritte aufweist:
Platzieren einer Trennmarkierung (144) in der Sammelzone (102), wenn die Artikel (104) einer der Artikeluntermengen in der Sammelzone (102) abgelegt sind, um Sammelbereiche (146) zu definieren.

10. Verfahren nach Anspruch 9, wobei der Schritt des Packens (S22) umfasst:
Packen der Artikel (104) aus einem der Sammelbereiche (146-1) in den zugewiesenen Versandbehälter (106);
Prüfen (S36), ob der zugewiesene Versandbehälter (106) jeden der Artikel (104) aus dem einen der Sammelbereiche (146-1) aufnehmen kann;
wenn der zugewiesene Versandbehälter (106) nicht jeden der Artikel (104) aus dem einen der Sammelbereiche (146-1) aufnehmen kann, Ablegen (S44) von überschüssigen Artikeln (104) in einen nachfolgenden Sammelbereich (146-2) und Informieren (S46) der Steuereinheit (48) über die abgelegten überschüssigen Artikel (104); oder
wenn der zugewiesene Versandbehälter (106) noch mehr als die Artikel (104) aus dem einen der Sammelbereiche (146-1) aufnehmen kann, Entnehmen (S40) zusätzlicher Artikel (104) aus einem nachfolgenden Sammelbereich (146-2), Packen der zusätzlichen Artikel (104) in den zugewiesenen Versandbehälter (106), bis der zugewiesene Versandbehälter (106) vollständig gepackt ist, und Informieren (S42) der Steuereinheit (48) über die Entnahme der zusätzlichen Artikel (104).

11. Verfahren nach einem der Ansprüche 1 bis 10, das ferner den Schritt aufweist:
auftragsorientiertes Stapeln von fertig gepackten Versandbehältern (106) auf Auftragsladungsträger (108).

12. Lager- und Kommissioniersystem (10) mit mindestens einer Pick-und-Pack-Station (100) zum Kommissionieren einer Vielzahl von unterschiedlichen Artikeln (104) gemäß Aufträgen (200), wobei zumindest einer der Aufträge (200) sowohl zerbrechliche Artikel (104) als auch unzerbrechliche Artikel (104) aufweist, die bruchsicher gemeinsam manuell in mindestens einen Versandbehälter (106) zu packen sind, wobei die Pick-und-Pack-Station (100) aufweist:
eine Vielzahl von Sammelzonen (102), jede der Sammelzonen (102) von einer ersten Seite (132) zum Puffern der Artikel (104) beladen und von einer zweiten, gegenüberliegenden Seite (134) zum Packen des mindestens einen Versandbehälters (106) entladen wird;
eine Zuführung (148) für leere Versandbehälter (106);
einen Bereitstellungsort (150) für den Auftragsladungsträger (108);
eine Zuführeinrichtung (122) für Lagereinheiten (90), die die zu kommissionierenden zerbrechlichen und unzerbrechlichen Artikel (104) enthalten;
eine Abführeinrichtung (124) für die Lagereinheiten (90); und
ein Kommissionierleitsystem (136),
wobei das Lager- und Kommissioniersystem (10) ferner aufweist:
ein Lager (14; 18; 26), in welchem Lagereinheiten (90) typenrein gelagert sind;
ein Fördersystem (46), insbesondere eine Paletten-Fördertechnik (70) und/oder eine Tablar-Fördertechnik (74); und
eine Steuereinheit (48), die eingerichtet ist, den Analyseschritt und die Zuweisungsschritte einer der Ansprüche 1 bis 8 durchzuführen.

13. Lager- und Kommissioniersystem nach Anspruch 12, wobei das Fördersystem (46) eine Paletten-Fördertechnik (70) und/oder eine Tablar-Fördertechnik (74) umfasst.

14. Lager- und Kommissioniersystem nach Anspruch 12 oder 13, wobei die Sammelzonen (102) nebeneinander angeordnet sind und die durch Barrieren (116) physisch voneinander getrennt sind.

15. Lager- und Kommissioniersystem nach einem der Ansprüche 12 bis 14, das ferner mindestens eine der folgenden Komponenten aufweist: einen Wareneingang (12), ein Langzeitlager (14), ein Hochregallager (16), ein Blocklager (18), eine Vereinzelungsstation (20), einen Depalettierer (22), ein Kurzzeitlager (26), ein Verteilsystem (30), einen Kommissionierbereich (40), einen Stapler (60), ein Regal (54), eine Schwerkraftbahn (64), und einen Warenausgang (44).

## Claims

1. A method (300) for picking according to the goods-to-man principle a plurality of different articles (104) in accordance with orders (200), wherein at least one of the orders (200) comprises both fragile and non-fragile articles (104), which are to be packed together into a shipping container (106) in a breakproof manner, in a storage and order-picking system (10), wherein the storage and order-picking system (10) comprises: a warehouse (14; 18; 26) in which the articles (104) are stored as storage units (90) each containing articles of one type only; at least one picking-and-packing station (100) comprising a plurality of collecting zones (102), and being configured to buffer a plurality of the articles (104) and provide the shipping container (106); a conveying system (46) connecting the warehouse (14; 18; 26) to the picking-and-packing stations (100); and a controlling unit (48) configured to assign the orders (200) to the picking-and-packing stations (100), monitor the picking process, and control material flow, wherein the method (300) comprises the steps of:
collecting (S10) a plurality of orders (200);
batch-orientated analyzing (S12) the collected orders (200) by the controlling unit (48);
batch-orientated assigning (S14) the analyzed orders (200) to the picking-and-packing stations (100) by the controlling unit (48), wherein each of the analyzed orders (200) is assigned to one of the collecting zones (102);
article-orientated conveying (S18) the storage units (90) via the conveying system (46) from the warehouse (14; 18; 26) to the picking-and-packing stations (100);
removing (S20) the articles (104) conveyed to the picking-and-packing stations (100), and order-orientated distributing the removed articles (104) among the corresponding collecting zones (102) by depositing the removed articles (104) into the corresponding collecting zones (102); and
packing (S22) the collected articles (104) into the shipping container (106) at the corresponding picking-and-packing stations (100);
wherein the step of analyzing (S12) comprises:
analyzing (S24) each of the orders (200) with regard to an order-specific quantity of articles;
determining (S26) an order-specific packing volume based on the order-specific quantity of articles;
dividing (S30) the order-specific quantity of articles into one or more subquantities of articles; and
assigning (S32) each of the subquantities of articles to the corresponding shipping container (106).

2. The method of claim 1, wherein the step of removing (S20) is performed manually.

3. The method of claim 1 or 2, wherein each order (200) comprises at least one order line, and wherein the removal (S20) is performed in a bundled manner in case of order lines which include several articles (104) of an identical article type.

4. The method of claim 1, 2 or 3, wherein the step of packing (S22) is performed such that the fragile articles (104) of the at least one of the orders (200) are secured by the non-fragile articles (104) of the at least one of the orders (200) against destruction during subsequent transportation.

5. The method of any of claims 1 to 4 comprising the step of:
collecting enough removed articles (104) in the collecting zones (102) to allow packing in a breakproof and/or filling-degree optimized manner.

6. The method of any of claims 1 to 5, wherein each of the orders (200) is packed into at least one of the shipping containers (106).

7. The method of claim 6, wherein each of the orders (200) is packed into at least one of the shipping containers (106) without additional filling material.

8. The method of any of claims 1 to 7, wherein
the dividing (S30) the order-specific quantity of articles into one or more subquantities of articles is performed dependent on a quotient of the order-specific packing volume and a volume of one shipping container (106).

9. The method of claim 1, which comprises the following steps if the order-specific quantity of articles is divided onto several ones of the shipping containers (106):
placing a separating marker (144) into the collecting zone (102) if the articles (104) of one of the subquantities of articles are deposited in the collecting zone (102), in order to define collecting regions (146).

10. The method of claim 9 wherein the step of packing (S22) includes:
packing the articles (104) from one of the collecting regions (146-1) into the assigned shipping container (106);
checking (S36) whether the assigned shipping container (106) can receive each of the articles (104) from the one of the collecting regions (146-1);
depositing (S44) surplus articles (104) in a subsequent collecting region (146-2), and informing (S46) the controlling unit (48) on the deposited surplus articles (104), if the assigned shipping container (106) cannot receive each of the articles (104) from the one of the collecting regions (146-1); or
if the assigned shipping container (106) can receive more than the articles (104) from the one of the collecting regions (146-1), removing (S40) additional articles (104) from a subsequent collecting region (146-2), packing the additional articles (104) into the assigned shipping container (106) until the assigned shipping container (106) is completely packed, and informing (S42) the controlling unit (48) on the removal of the additional articles (104).

11. The method of any of claims 1 to 10 further comprising the step of:
order-orientated stacking completely packed shipping containers (106) on order-load supports (108).

12. A storage and order-picking system (10) including at least one picking-and-packing station (100) for picking in accordance with orders (200) a plurality of different articles (104), wherein at least one of the orders (200) comprises both fragile articles (104) and non-fragile articles (104), which are to be packed together in a breakproof manner manually into at least one shipping container (106), wherein the picking-and-packing station (100) comprises:
a plurality of collecting zones (102), wherein each of the collecting zones (102) is loaded from a first side (132) for buffering the articles (104) and unloaded from a second opposite side (134) for packing the at least one shipping container (106);
a feeding device (148) for empty shipping containers (106);
a provision location (150) for the order-load support (108);
a feeding device (122) for storage units (90) containing the to-be-picked fragile and non-fragile articles (104); and
a discharging device (124) for the storage units (90); and
a picking-guidance system (136);
wherein the storage and order-picking system (10) further comprises:
a warehouse (14; 18; 26) where storage units (90) respectively containing articles of one type only are stored;
a conveying system (46), particularly a pallet-conveying system (70) and/or a tray-conveying system (74); and
a controlling unit (48) configured to perform the step of analyzing and the steps of assigning according to the claims 1 to 8.

13. The storage and order-picking system of claim 12, wherein the conveying system (46) includes a pallet-conveying system (70) and/or a tray-conveying system (74).

14. The storage and order-picking system of claim 12 or 13, wherein the collecting zones (102) are arranged side-by-side, and separated from each other by barriers (116) physically.

15. The storage and order-picking system of any of claims 12 to 14 further comprising at least one of the following components: a goods receipt (12), a long-term warehouse (14), a high-bay warehouse (16), a block warehouse (18), a separating station (20), a depalletizing device (22), a short-term warehouse (26), a distributing system (30), an picking region (40), a stacker truck (60), a rack (54), a gravity track (64), and a goods issue (44).

## Revendications

1. Procédé (300) permettant de préparer des commandes d'une pluralité d'articles (104) différents selon des commandes (200), dans lequel au moins l'une des commandes (200) présente à la fois des articles (104) fragiles et des articles non fragiles qui sont à emballer de manière incassable ensemble dans un contenant d'expédition (106) dans un système de stockage et de préparation de commandes (10) selon le principe marchandise vers l'homme, le système de stockage et de préparation de commandes (10) présentant : un stock (14; 18 ; 26) dans lequel les articles (104) sont stockés sous forme d'unités de stockage (90) d'un même type ; au moins un poste de prélèvement et d'emballage (100) qui présente plusieurs zones de collecte (102) et est conçu pour stocker temporairement plusieurs des articles (104) et pour fournir le contenant d'expédition (106) ; un système de transport (46) qui relie l'entrepôt (14 ; 18 ; 26) aux postes de prélèvement et d'emballage (100) ; et une unité de commande (48) qui est conçue pour attribuer les commandes (200) aux postes de prélèvement et d'emballage (100), surveiller la préparation des commandes et commander un flux de matériel ;
le procédé (300) présentant les étapes suivantes consistant à :
collecter (S10) une pluralité de commandes (200) ;
effectuer par l'unité de commande (48) une analyse par lot (S12) des commandes collectées (200) ;
effectuer par l'unité de commande (48) une attribution par lot (S14) des commandes analysées (200) aux postes de prélèvement et d'emballage (100), l'une des zones de collecte (102) étant attribuée à chacune des commandes analysées (200) ;
effectuer un transport par article (S18) des unités de stockage (90) par l'intermédiaire du système de transport (46) de l'entrepôt (14 ; 18 ; 26) aux postes de prélèvement et d'emballage (100) ;
prélever (S20) les articles (104) transportés jusqu'aux postes de prélèvement et d'emballage (100) et répartir par commande les articles prélevés (104) sur les zones de collecte (102) correspondantes en déposant les articles prélevés (104) dans les zones de collecte (102) correspondantes ; et
emballer (S22) les articles collectés (104) dans les contenants d'expédition (106) au niveau des postes de prélèvement et d'emballage (100) correspondants ;
l'étape d'analyse (S12) présentant :
l'analyse (S24) de chacune des commandes (200) concernant un ensemble d'articles spécifique à la commande ;
la détermination (S26) d'un volume d'emballage spécifique à la commande sur la base de l'ensemble d'articles spécifique à la commande ;
la division (S30) de l'ensemble d'articles spécifique à la commande en un ou plusieurs sous-ensembles d'articles ; et
l'attribution (S32) de chacun des sous-ensembles d'articles au contenant d'expédition (106) correspondant.

2. Procédé selon la revendication 1, dans lequel l'étape de prélèvement est effectuée manuellement.

3. Procédé selon la revendication 1 ou 2, dans lequel chaque commande (200) présente au moins une ligne de commande, et dans lequel le prélèvement (S20) dans le cas de lignes de commande comprenant plusieurs articles (104) d'un même type d'article est effectué de façon groupée.

4. Procédé selon la revendication 1, 2 ou 3, dans lequel l'étape d'emballage (S22) est effectuée de telle sorte que les articles fragiles (104) de ladite au moins une des commandes (200) sont protégés contre toute destruction pendant un transport ultérieur par les articles non fragiles (104) de ladite au moins une des commandes (200).

5. Procédé selon l'une quelconque des revendications 1 à 4, qui présente l'étape consistant à :
collecter des quantités suffisantes d'articles prélevés (104) dans les zones de collecte (102) afin de permettre un emballage incassable et/ou optimisé en taux de remplissage.

6. Procédé selon l'une quelconque des revendications 1 à 5, dans lequel chacune des commandes (200) est emballée dans au moins l'un des contenants d'expédition (106).

7. Procédé selon la revendication 6, dans lequel chacune des commandes (200) est emballée dans au moins l'un des contenants d'expédition (106) sans matériel de calage supplémentaire.

8. Procédé selon l'une quelconque des revendications 1 à 7, dans lequel la division (S30) de l'ensemble d'articles spécifique à la commande en un ou plusieurs sous-ensembles d'articles est effectuée en fonction d'un quotient composé du volume d'emballage spécifique à la commande et d'un volume d'un contenant d'expédition (106).

9. Procédé selon la revendication 1, qui, si l'ensemble d'articles spécifique à la commande est réparti sur plusieurs des contenants d'expédition (106), présente l'étape suivante consistant à :
placer un repère de séparation (144) dans la zone de collecte (102) si les articles (104) d'un des sous-ensembles d'articles sont déposés dans la zone de collecte (102) afin de définir des sections de collecte (146).

10. Procédé selon la revendication 9, dans lequel l'étape d'emballage (S22) comprend :
l'emballage des articles (104) provenant d'une des sections de collecte (146-1) dans le contenant d'expédition attribué (106) ;
la vérification (S36) si le contenant d'expédition attribué (106) peut recevoir chacun des articles (104) provenant d'une des sections de collecte (146-1);
si le contenant d'expédition attribué (106) ne peut pas recevoir chacun des articles (104) provenant de ladite une des sections de collecte (146-1), le fait de déposer (S44) les articles excédentaires (104) dans une section de collecte suivante (146-2) et d'informer (S46) l'unité de commande (48) des articles excédentaires déposés (104) ; ou
si le contenant d'expédition attribué (106) peut recevoir encore plus que les articles (104) provenant de ladite une des sections de collecte (146-1), le prélèvement (S40) d'articles supplémentaires (104) d'une section de collecte suivante (146-2), l'emballage des articles supplémentaires (104) dans le contenant d'expédition attribué (106) jusqu'à ce le contenant d'expédition attribué (106) soit entièrement rempli, et le fait d'informer (S42) l'unité de commande (48) du prélèvement des articles supplémentaires (104).

11. Procédé selon l'une quelconque des revendications 1 à 10, présentant en outre l'étape consistant à :
empiler par commande des contenants d'expédition tout emballés (106) sur des supports de manutention de commande (108).

12. Système de stockage et de préparation de commandes (10), comprenant au moins un poste de prélèvement et d'emballage (100) servant à préparer des commandes d'une pluralité d'articles différents (104) selon des commandes (200), dans lequel au moins l'une des commandes (200) présente à la fois des articles fragiles (104) et des articles non fragiles (104) qui sont à emballer de manière incassable ensemble manuellement dans au moins un contenant d'expédition (106), le poste de prélèvement et d'emballage (100) présentant :
une pluralité de zones de collecte (102), chacune des zones de collecte (102) étant chargée par un premier côté (132) pour le stockage temporaire des articles (104) et étant déchargée par un deuxième côté opposé (134) pour l'emballage de l'au moins un contenant d'expédition (106) ;
une arrivée (148) pour des contenants d'expédition vides (106) ;
un lieu d'approvisionnement (150) pour les supports de manutention de commande (108) ;
un dispositif d'alimentation (122) pour des unités de stockage (90) qui contiennent les articles fragiles et non fragiles (104) à préparer ;
un dispositif d'évacuation (124) pour les unités de stockage (90) ; et
un système de gestion de préparation de commandes (136),
le système de stockage et de préparation de commandes (10) présentant en outre :
un stock (14 ; 18 ; 26) dans lequel des unités de stockage (90) d'un même type sont stockées ;
un système de transport (46), en particulier une technique de transport par palette (70) et/ou une technique de transport par plateau (74) ; et
une unité de commande (48) qui est conçue pour effectuer l'étape d'analyse et les étapes d'attribution selon l'une quelconque des revendications 1 à 8.

13. Système de stockage et de préparation de commandes selon la revendication 12, dans lequel le système de transport (46) comprend une technique de transport par palette (70) et/ou une technique de transport par plateau (74).

14. Système de stockage et de préparation de commandes selon la revendication 12 ou 13, dans lequel les zones de collecte (102) sont disposées les unes à côté des autres et sont physiquement séparées les unes des autres par des barrières (116).

15. Système de stockage et de préparation de commandes selon l'une quelconque des revendications 12 à 14, présentant en outre au moins l'un des composants suivants :
une entrée de marchandises (12), un entrepôt de longue durée (14), un entrepôt à hauts rayonnages (16), un bloc (18), un poste de séparation (20), un dispositif de dépalettisation (22), un entrepôt de courte durée (26), un système de répartition (30), une section de préparation de commandes (40), un chariot-élévateur (60), une étagère (54), un convoyeur gravitaire (64), et une sortie de marchandises (44).
